# EUROPEAN PATENT APPLICATION

(11) **EP 3 787 296 A1**
(43) Date of publication of application: **03.03.2021**
(21) Application number: 19807360.3
(22) Date of filing: 21.05.2019
(51) Int. Cl.: H04N 19/70, H04N 19/51, H04N 19/184

(54) **METHOD AND APPARATUS FOR DECODING IMAGE BY USING MVD DERIVED ON BASIS OF LUT IN IMAGE CODING SYSTEM**

(30) Priority: 21.05.2018 KR 20180057606
(71) Applicant: LG Electronics Inc., Yeongdeungpo-gu Seoul 07336 (KR)
(72) Inventor: JANG, Hyeongmoon, Seoul 06772 (KR)
(74) Representative: Mooser, Sebastian Thomas
(86) International application number: PCT/KR2019/006038
(87) International publication number: WO 2019/225933

(57) **Abstract**

A method for decoding an image by a decoding apparatus according to the present disclosure comprises the steps of: acquiring prediction-related information of a current block; configuring a motion information candidate list of the current block; deriving, as motion information of the current block, a motion information candidate indicated by a candidate index among motion information candidates included in the motion information candidate list; deriving a motion vector difference (MVD) of the current block on the basis of a look-up table (LUT) and index information of an MVD; deriving modified motion information of the current block on the basis of the motion information and the MVD; and predicting the current block on the basis of the modified motion information, wherein the prediction-related information includes the candidate index and the index information of the MVD.

## Description

### BACKGROUND OF THE DISCLOSURE

### Field of the disclosure

The present disclosure relates generally to an image coding technology, and more particularly, to an image decoding method and apparatus which use a motion vector difference (MVD) derived based on an LUT in an image coding system.

### Related Art

Demand for high-resolution, high-quality images such High Definition (HD) images and Ultra High Definition (UHD) images has been increasing in various fields. As the image data has high resolution and high quality, the amount of information or bits to be transmitted increases relative to the legacy image data. Therefore, when image data is transmitted using a medium such as a conventional wired/wireless broadband line or image data is stored using an existing storage medium, the transmission cost and the storage cost thereof are increased.

Accordingly, there is a need for a highly efficient image compression technique for effectively transmitting, storing, and reproducing information of high resolution and high quality images.

### SUMMARY

A technical objective of the present disclosure is to provide a method and apparatus which increase image coding efficiency.

Another technical problem of the disclosure is to provide a method and apparatus which derive an MVD using additional information and an LUT.

Still another technical problem of the disclosure is to provide a method and apparatus which derive motion information based on an MVD derived using additional information and an LUT, and perform prediction based on the derived motion information.

According to an example of the present disclosure, there is provided an image decoding method which is performed by a decoding device. The method includes obtaining prediction related information of a current block, constructing a motion information candidate list for the current block, deriving, as motion information of the current block, one of motion information candidates included in the motion information candidate list, which is indicated by a candidate index, deriving a motion vector difference (MVD) of the current block based on a look-up table (LUT) and index information on the MVD, deriving modified motion information of the current block based on the motion information and the MVD, and performing prediction on the current block based on the modified motion information, wherein the prediction related information includes the candidate index and the index information on the MVD.

According to another example of the present disclosure, there is provided a decoding device which performs image decoding. The decoding device includes an entropy decoder which obtains prediction related information of a current block; and a predictor which constructs a motion information candidate list for the current block, derives, as motion information of the current block, one of motion information candidates included in the motion information candidate list, which is indicated by a candidate index, derives a motion vector difference (MVD) of the current block based on a look-up table (LUT) and index information on the MVD, derives modified motion information of the current block based on the motion information and the MVD, and performs prediction on the current block based on the modified motion information, wherein the prediction related information includes the candidate index and the index information on the MVD.

According to still another example of the present disclosure, there is provided a video encoding method which is performed by an encoding device. The method includes constructing a motion information candidate list for a current block, deriving motion information of the current block based on the motion information candidate list, deriving an MVD of the current block based on a look-up table (LUT), deriving modified motion information of the current block based on the motion information and the MVD, performing prediction on the current block based on the modified motion information, and encoding image information including prediction related information of the current block, wherein the prediction related information includes index information on the MVD.

According to still another example of the present disclosure, there is provided a video encoding device. The encoding device includes a predictor which constructs a motion information candidate list for a current block, derives motion information of the current block based on the motion information candidate list, derives an MVD of the current block based on a look-up table (LUT), derives modified motion information of the current block based on the motion information and the MVD, and performs prediction on the current block based on the modified motion information; and an entropy encoder which encodes image information including prediction related information of the current block, wherein the prediction related information includes index information on the MVD.

According to the present disclosure, the MVD may derived based on the signaled index information and a pre-defined look-up table (LUT), and the motion information of the current block may be derived based on the derived MVD and MVP to perform prediction, through which the amount of bits for transmitting MVD can be reduced, and overall coding efficiency can be improved.

According to the present disclosure described above, the MVD may be derived based on the signaled index information and a pre-defined look-up table (LUT), and the motion information of the current block may be derived based on the derived MVD and MVP to perform prediction, through which, while allocating a small amount of bits to indicate the MVD, it is possible to derive more accurate motion information than prediction performed using motion information of a neighboring block, and improve the overall coding efficiency by improving the prediction accuracy.

### BRIEF DESCRIPTION OF THE DRAWINGS

FIG. 1 is a schematic diagram illustrating a configuration of a video encoding device to which the present disclosure is applicable.
FIG. 2 is a schematic diagram illustrating a configuration of a video decoding device to which the present disclosure is applicable.
FIG. 3 illustratively represents a neighboring block referred to in order to derive a merge candidate in a merge mode.
FIG. 4 represents an example of applying the above-described method of deriving an MVD based on additional information.
FIG. 5 represents an example of applying the AMVR and the method of deriving an MVD based on additional information as described above.
FIG. 6 represents an example of deriving an LUT.
FIG. 7 illustratively represent a random access structure. FIG. 7 may represent an encoding/decoding order of frames.
FIG. 8 illustratively represent a reference LUT for a temporal layer.
FIG. 9 represents an example of managing an LUT candidate for a temporal layer.
FIG. 10 represents an example of reordering LUT candidates for a temporal layer.
FIG. 11 schematically represents an image encoding method by an encoding device according to the present disclosure.
FIG. 12 schematically represents an encoding device performing an image encoding method according to the present disclosure.
FIG. 13 schematically represents an image decoding method by a decoding device according to the present disclosure.
FIG. 14 schematically represents a decoding device performing an image decoding method according to the present disclosure.
FIG. 15 illustratively represents a content streaming system structure diagram to which the present disclosure is applied.

### DESCRIPTION OF EXEMPLARY EMBODIMENTS

The present disclosure may be modified in various forms, and specific embodiments thereof will be described and illustrated in the drawings. However, the embodiments are not intended for limiting the disclosure. The terms used in the following description are used to merely describe specific embodiments, but are not intended to limit the disclosure. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

Meanwhile, elements in the drawings described in the disclosure are independently drawn for the purpose of convenience for explanation of different specific functions, and do not mean that the elements are embodied by independent hardware or independent software. For example, two or more elements of the elements may be combined to form a single element, or one element may be divided into plural elements. The embodiments in which the elements are combined and/or divided belong to the disclosure without departing from the concept of the disclosure.

Hereinafter, embodiments of the present disclosure will be described in detail with reference to the accompanying drawings. In addition, like reference numerals are used to indicate like elements throughout the drawings, and the same descriptions on the like elements will be omitted.

Meanwhile, the present disclosure relates to video/image coding. For example, the method(s)/embodiment(s) disclosed in the present disclosure may be applied to a method disclosed in versatile video coding (VVC) standard, Essential Video Coding (EVC) standard, AOMedia Video 1 (AV1) standard, 2nd generation of audio video coding (AVS2) standard or a next generation video/image coding standard (ex. H.267, H.268).

In the present specification, generally a picture means a unit representing an image at a specific time, a slice is a unit constituting a part of the picture. One picture may be composed of plural slices, and the terms of a picture and a slice may be mixed with each other as occasion demands.

A pixel or a pel may mean a minimum unit constituting one picture (or image). Further, a "sample" may be used as a term corresponding to a pixel. The sample may generally represent a pixel or a value of a pixel, may represent only a pixel (a pixel value) of a luma component, and may represent only a pixel (a pixel value) of a chroma component.

A unit indicates a basic unit of image processing. The unit may include at least one of a specific area and information related to the area. Optionally, the unit may be mixed with terms such as a block, an area, or the like. In a typical case, an M□N block may represent a set of samples or transform coefficients arranged in M columns and N rows.

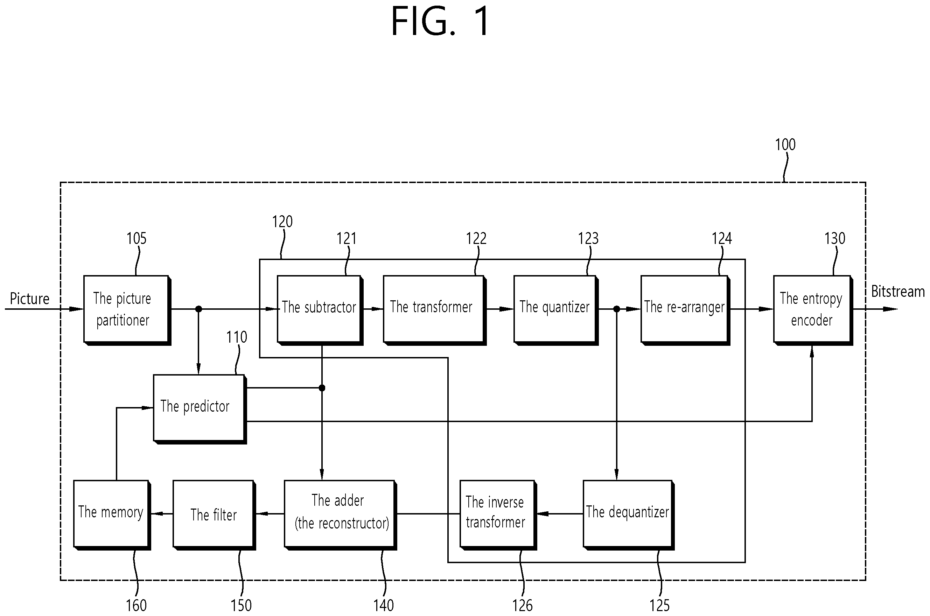

FIG. 1 is a schematic diagram illustrating a configuration of a video encoding device to which the present disclosure is applicable.

Referring to FIG. 1, a video encoding device 100 may include a picture partitioner 105, a predictor 110, a residual processor 120, an entropy encoder 130, an adder 140, a filter 150, and a memory 160. The residual processor 120 may include a subtractor 121, a transformer 122, a quantizer 123, a re-arranger 124, a dequantizer 125, an inverse transformer 126.

The picture partitioner 105 may split an input picture into at least one processing unit.

In an example, the processing unit may be referred to as a coding unit (CU). In this case, the coding unit may be recursively split from the largest coding unit (LCU) according to a quad-tree binary-tree (QTBT) structure. For example, one coding unit may be split into a plurality of coding units of a deeper depth based on a quadtree structure and/or a binary tree structure. In this case, for example, the quad tree structure may be first applied and the binary tree structure may be applied later. Alternatively, the binary tree structure may be applied first. The coding procedure according to the present disclosure may be performed based on a final coding unit which is not split any further. In this case, the largest coding unit may be used as the final coding unit based on coding efficiency, or the like, depending on image characteristics, or the coding unit may be recursively split into coding units of a lower depth as necessary and a coding unit having an optimal size may be used as the final coding unit. Here, the coding procedure may include a procedure such as prediction, transformation, and reconstruction, which will be described later.

In another example, the processing unit may include a coding unit (CU) prediction unit (PU), or a transform unit (TU). The coding unit may be split from the largest coding unit (LCU) into coding units of a deeper depth according to the quad tree structure. In this case, the largest coding unit may be directly used as the final coding unit based on the coding efficiency, or the like, depending on the image characteristics, or the coding unit may be recursively split into coding units of a deeper depth as necessary and a coding unit having an optimal size may be used as a final coding unit. When the smallest coding unit (SCU) is set, the coding unit may not be split into coding units smaller than the smallest coding unit. Here, the final coding unit refers to a coding unit which is partitioned or split to a prediction unit or a transform unit. The prediction unit is a unit which is partitioned from a coding unit, and may be a unit of sample prediction. Here, the prediction unit may be divided into sub-blocks. The transform unit may be divided from the coding unit according to the quad-tree structure and may be a unit for deriving a transform coefficient and/or a unit for deriving a residual signal from the transform coefficient. Hereinafter, the coding unit may be referred to as a coding block (CB), the prediction unit may be referred to as a prediction block (PB), and the transform unit may be referred to as a transform block (TB). The prediction block or prediction unit may refer to a specific area in the form of a block in a picture and include an array of prediction samples. Also, the transform block or transform unit may refer to a specific area in the form of a block in a picture and include the transform coefficient or an array of residual samples.

The predictor 110 may perform prediction on a processing target block (hereinafter, a current block), and may generate a predicted block including prediction samples for the current block. A unit of prediction performed in the predictor 110 may be a coding block, or may be a transform block, or may be a prediction block.

The predictor 110 may determine whether intra-prediction is applied or inter-prediction is applied to the current block. For example, the predictor 110 may determine whether the intra-prediction or the inter-prediction is applied in unit of CU.

In case of the intra-prediction, the predictor 110 may derive a prediction sample for the current block based on a reference sample outside the current block in a picture to which the current block belongs (hereinafter, a current picture). In this case, the predictor 110 may derive the prediction sample based on an average or interpolation of neighboring reference samples of the current block (case (i)), or may derive the prediction sample based on a reference sample existing in a specific (prediction) direction as to a prediction sample among the neighboring reference samples of the current block (case (ii)). The case (i) may be called a non-directional mode or a non-angular mode, and the case (ii) may be called a directional mode or an angular mode. In the intra-prediction, prediction modes may include as an example 33 directional modes and at least two non-directional modes. The non-directional modes may include DC mode and planar mode. The predictor 110 may determine the prediction mode to be applied to the current block by using the prediction mode applied to the neighboring block.

In case of the inter-prediction, the predictor 110 may derive the prediction sample for the current block based on a sample specified by a motion vector on a reference picture. The predictor 110 may derive the prediction sample for the current block by applying any one of a skip mode, a merge mode, and a motion vector prediction (MVP) mode. In case of the skip mode and the merge mode, the predictor 110 may use motion information of the neighboring block as motion information of the current block. In case of the skip mode, unlike in the merge mode, a difference (residual) between the prediction sample and an original sample is not transmitted. In case of the MVP mode, a motion vector of the neighboring block is used as a motion vector predictor and thus is used as a motion vector predictor of the current block to derive a motion vector of the current block.

In case of the inter-prediction, the neighboring block may include a spatial neighboring block existing in the current picture and a temporal neighboring block existing in the reference picture. The reference picture including the temporal neighboring block may also be called a collocated picture (colPic). Motion information may include the motion vector and a reference picture index. Information such as prediction mode information and motion information may be (entropy) encoded, and then output as a form of a bitstream.

When motion information of a temporal neighboring block is used in the skip mode and the merge mode, a highest picture in a reference picture list may be used as a reference picture. Reference pictures included in the reference picture list may be aligned based on a picture order count (POC) difference between a current picture and a corresponding reference picture. A POC corresponds to a display order and can be discriminated from a coding order.

The subtractor 121 generates a residual sample which is a difference between an original sample and a prediction sample. If the skip mode is applied, the residual sample may not be generated as described above.

The transformer 122 transforms residual samples in units of a transform block to generate a transform coefficient. The transformer 122 may perform transformation based on the size of a corresponding transform block and a prediction mode applied to a coding block or prediction block spatially overlapping with the transform block. For example, residual samples can be transformed using discrete sine transform (DST) transform kernel if intra-prediction is applied to the coding block or the prediction block overlapping with the transform block and the transform block is a 4×4 residual array and is transformed using discrete cosine transform (DCT) transform kernel in other cases.

The quantizer 123 may quantize the transform coefficients to generate quantized transform coefficients.

The re-arranger 124 rearranges quantized transform coefficients. The re-arranger 124 may rearrange the quantized transform coefficients in the form of a block into a one-dimensional vector through a coefficient scanning method. Although the re-arranger 124 is described as a separate component, the re-arranger 124 may be a part of the quantizer 123.

The entropy encoder 130 may perform entropy encoding on the quantized transform coefficients. The entropy encoding may include an encoding method, for example, an exponential Golomb, a context-adaptive variable length coding (CAVLC), a context-adaptive binary arithmetic coding (CABAC), or the like. The entropy encoder 130 may perform encoding together or separately on information (e.g., a syntax element value or the like) required for video reconstruction in addition to the quantized transform coefficients. The entropy encoded information may be transmitted or stored in unit of a network abstraction layer (NAL) in a bitstream form.

The dequantizer 125 dequantizes values (transform coefficients) quantized by the quantizer 123 and the inverse transformer 126 inversely transforms values dequantized by the dequantizer 125 to generate a residual sample.

The adder 140 adds a residual sample to a prediction sample to reconstruct a picture. The residual sample may be added to the prediction sample in units of a block to generate a reconstructed block. Although the adder 140 is described as a separate component, the adder 140 may be a part of the predictor 110. Meanwhile, the adder 140 may be referred to as a reconstructor or reconstructed block generator.

The filter 150 may apply deblocking filtering and/or a sample adaptive offset to the reconstructed picture. Artifacts at a block boundary in the reconstructed picture or distortion in quantization can be corrected through deblocking filtering and/or sample adaptive offset. Sample adaptive offset may be applied in units of a sample after deblocking filtering is completed. The filter 150 may apply an adaptive loop filter (ALF) to the reconstructed picture. The ALF may be applied to the reconstructed picture to which deblocking filtering and/or sample adaptive offset has been applied.

The memory 160 may store a reconstructed picture (decoded picture) or information necessary for encoding/decoding. Here, the reconstructed picture may be the reconstructed picture filtered by the filter 150. The stored reconstructed picture may be used as a reference picture for (inter) prediction of other pictures. For example, the memory 160 may store (reference) pictures used for inter-prediction. Here, pictures used for inter-prediction may be designated according to a reference picture set or a reference picture list.

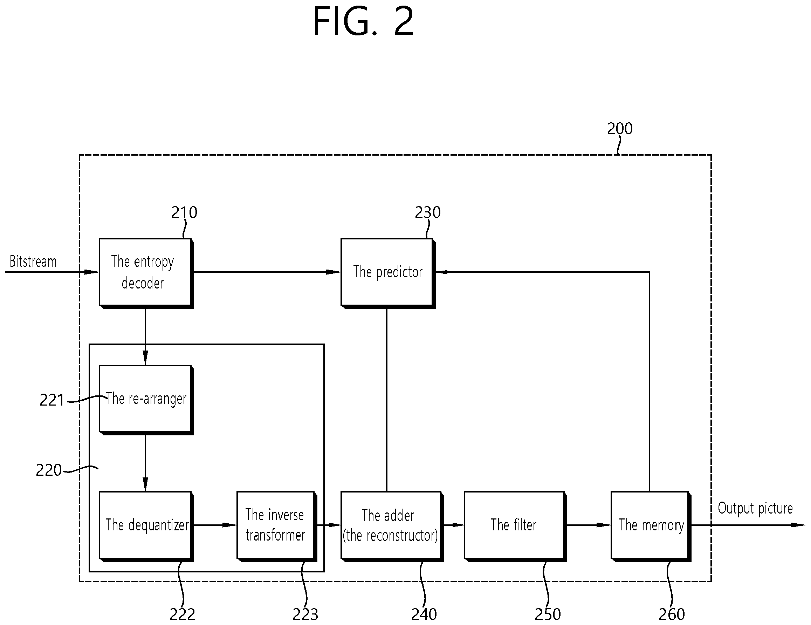

FIG. 2 is a schematic diagram illustrating a configuration of a video decoding device to which the present disclosure is applicable.

Referring to FIG. 2, a video decoding device 200 may include an entropy decoder 210, a residual processor 220, a predictor 230, an adder 240, a filter 250, and a memory 260. The residual processor 220 may include a re-arranger 221, a dequantizer 222, an inverse transformer 223.

When a bitstream including video information is input, the video decoding device 200 may reconstruct a video in relation to a process by which video information is processed in the video encoding device.

For example, the video decoding device 200 may perform video decoding using a processing unit applied in the video encoding device. Thus, the processing unit block of video decoding may be, for example, a coding unit and, in another example, a coding unit, a prediction unit or a transform unit. The coding unit may be split from the largest coding unit according to the quad tree structure and/or the binary tree structure.

A prediction unit and a transform unit may be further used in some cases, and in this case, the prediction block is a block derived or partitioned from the coding unit and may be a unit of sample prediction. Here, the prediction unit may be divided into sub-blocks. The transform unit may be split from the coding unit according to the quad tree structure and may be a unit that derives a transform coefficient or a unit that derives a residual signal from the transform coefficient.

The entropy decoder 210 may parse the bitstream to output information required for video reconstruction or picture reconstruction. For example, the entropy decoder 210 may decode information in the bitstream based on a coding method such as exponential Golomb encoding, CAVLC, CABAC, or the like, and may output a value of a syntax element required for video reconstruction and a quantized value of a transform coefficient regarding a residual.

More specifically, a CABAC entropy decoding method can receive a bin corresponding to each syntax element in a bitstream, determine a context model using decoding target syntax element information and decoding information of neighboring and decoding target blocks or information of symbol/bin decoded in a previous step, predict bin generation probability according to the determined context model and perform arithmetic decoding of the bin to generate a symbol corresponding to each syntax element value. Here, the CABAC entropy decoding method can update the context model using information of a symbol/bin decoded for a context model of the next symbol/bin after determination of the context model.

Information on prediction among information decoded in the entropy decoder 210 may be provided to the predictor 230 and residual values, that is, quantized transform coefficients, on which entropy decoding has been performed by the entropy decoder 210 may be input to the re-arranger 221.

The re-arranger 221 may rearrange the quantized transform coefficients into a two-dimensional block form. The re-arranger 221 may perform rearrangement corresponding to coefficient scanning performed by the encoding device. Although the re-arranger 221 is described as a separate component, the re-arranger 221 may be a part of the dequantizer 222.

The dequantizer 222 may de-quantize the quantized transform coefficients based on a (de)quantization parameter to output a transform coefficient. In this case, information for deriving a quantization parameter may be signaled from the encoding device.

The inverse transformer 223 may inverse-transform the transform coefficients to derive residual samples.

The predictor 230 may perform prediction on a current block, and may generate a predicted block including prediction samples for the current block. A unit of prediction performed in the predictor 230 may be a coding block or may be a transform block or may be a prediction block.

The predictor 230 may determine whether to apply intra-prediction or inter-prediction based on information on a prediction. In this case, a unit for determining which one will be used between the intra-prediction and the inter-prediction may be different from a unit for generating a prediction sample. In addition, a unit for generating the prediction sample may also be different in the inter-prediction and the intra-prediction. For example, which one will be applied between the inter-prediction and the intra-prediction may be determined in unit of CU. Further, for example, in the inter-prediction, the prediction sample may be generated by determining the prediction mode in unit of PU, and in the intra-prediction, the prediction sample may be generated in unit of TU by determining the prediction mode in unit of PU.

In case of the intra-prediction, the predictor 230 may derive a prediction sample for a current block based on a neighboring reference sample in a current picture. The predictor 230 may derive the prediction sample for the current block by applying a directional mode or a non-directional mode based on the neighboring reference sample of the current block. In this case, a prediction mode to be applied to the current block may be determined by using an intra-prediction mode of a neighboring block.

In the case of inter-prediction, the predictor 230 may derive a prediction sample for a current block based on a sample specified in a reference picture according to a motion vector. The predictor 230 may derive the prediction sample for the current block using one of the skip mode, the merge mode and the MVP mode. Here, motion information required for inter-prediction of the current block provided by the video encoding device, for example, a motion vector and information on a reference picture index may be obtained or derived based on the information on prediction.

In the skip mode and the merge mode, motion information of a neighboring block may be used as motion information of the current block. Here, the neighboring block may include a spatial neighboring block and a temporal neighboring block.

The predictor 230 may construct a merge candidate list using motion information of available neighboring blocks and use information indicated by a merge index on the merge candidate list as a motion vector of the current block. The merge index may be signaled by the encoding device. Motion information may include a motion vector and a reference picture. When motion information of a temporal neighboring block is used in the skip mode and the merge mode, a highest picture in a reference picture list may be used as a reference picture.

In the case of the skip mode, a difference (residual) between a prediction sample and an original sample is not transmitted, distinguished from the merge mode.

In the case of the MVP mode, the motion vector of the current block may be derived using a motion vector of a neighboring block as a motion vector predictor. Here, the neighboring block may include a spatial neighboring block and a temporal neighboring block.

When the merge mode is applied, for example, a merge candidate list can be generated using a motion vector of a reconstructed spatial neighboring block and/or a motion vector corresponding to a Col block which is a temporal neighboring block. A motion vector of a candidate block selected from the merge candidate list is used as the motion vector of the current block in the merge mode. The aforementioned information on prediction may include a merge index indicating a candidate block having the best motion vector selected from candidate blocks included in the merge candidate list. Here, the predictor 230 may derive the motion vector of the current block using the merge index.

When the MVP (Motion vector Prediction) mode is applied as another example, a motion vector predictor candidate list may be generated using a motion vector of a reconstructed spatial neighboring block and/or a motion vector corresponding to a Col block which is a temporal neighboring block. That is, the motion vector of the reconstructed spatial neighboring block and/or the motion vector corresponding to the Col block which is the temporal neighboring block may be used as motion vector candidates. The aforementioned information on prediction may include a prediction motion vector index indicating the best motion vector selected from motion vector candidates included in the list. Here, the predictor 230 may select a prediction motion vector of the current block from the motion vector candidates included in the motion vector candidate list using the motion vector index. The predictor of the encoding device may obtain a motion vector difference (MVD) between the motion vector of the current block and a motion vector predictor, encode the MVD and output the encoded MVD in the form of a bitstream. That is, the MVD can be obtained by subtracting the motion vector predictor from the motion vector of the current block. Here, the predictor 230 may obtain a motion vector included in the information on prediction and derive the motion vector of the current block by adding the motion vector difference to the motion vector predictor. In addition, the predictor may obtain or derive a reference picture index indicating a reference picture from the aforementioned information on prediction.

The adder 240 can add a residual sample to a prediction sample to reconstruct a current block or a current picture. The adder 240 may reconstruct the current picture by adding the residual sample to the prediction sample in units of a block. When the skip mode is applied, a residual is not transmitted and thus the prediction sample may become a reconstructed sample. Although the adder 240 is described as a separate component, the adder 240 may be a part of the predictor 230. Meanwhile, the adder 240 may be referred to as a reconstructor or reconstructed block generator.

The filter 250 may apply deblocking filtering, sample adaptive offset and/or ALF to the reconstructed picture. Here, sample adaptive offset may be applied in units of a sample after deblocking filtering. The ALF may be applied after deblocking filtering and/or application of sample adaptive offset.

The memory 260 may store a reconstructed picture (decoded picture) or information necessary for decoding. Here, the reconstructed picture may be the reconstructed picture filtered by the filter 250. For example, the memory 260 may store pictures used for inter-prediction. Here, the pictures used for inter-prediction may be designated according to a reference picture set or a reference picture list. A reconstructed picture may be used as a reference picture for other pictures. The memory 260 may output reconstructed pictures in an output order.

Meanwhile, when the advanced motion vector prediction (AMVP) mode is applied in the inter prediction, the motion vector predictor (MVP) candidate list may be generated, as described above, based on the motion vector of the spatial neighboring block and/or the temporal neighboring block of the current block, and the motion vector predictor (MVP) of the current block may be derived based on the obtained MVP index from among MVP candidates included in the MVP candidate list. In this case, the decoding device may obtain a motion vector difference (MVD) of the current block through the bitstream, and the motion vector of the current block may be derived through the addition of the MVP and the MVD.

However, there may be a problem that a large amount of bits is allocated for transmitting the MVD and overall coding efficiency is deteriorated. In addition, when the merge mode is applied, motion information of the current block is derived from among merge candidates of the merge candidate list constructed based on neighboring blocks, and thus prediction accuracy may be lowered compared to the AMVP mode in which the MVD is transmitted.

Therefore, the present disclosure proposes a method which includes signaling index information instead of the existing MVD, deriving the MVD based on the signaled index information and a pre-defined look-up table (LUT), and restoring motion information of the current block based on the derived MVD and MVP. The method proposed in the present disclosure plays an intermediate role between the existing merge mode and the AMVP mode, so that it has an advantage of delivering more detailed motion information compared to the merge mode, and an advantage of reducing bit amount compared to the AMVP mode.

As an embodiment, there may be proposed a method which includes signaling three indices, and reconstructing motion information of a current block by referring to the indices and a pre-defined LUT.

For example, a candidate index may be signaled. The decoding device may obtain a candidate index indicating one of the motion information candidates of the motion information candidate list derived based on the neighboring block, and may use, as base motion information (e.g., MVP), the motion information candidate represented by the candidate index. Here, the motion information candidate list may represent the MVP candidate list, the motion information candidates may represent MVP candidates, and the candidate index may represent an MVP index. Alternatively, the motion information candidate list may represent the merge candidate list, the motion information candidates may represent merge candidates, and the candidate index may represent a merge index. In this case, an index (e.g., a merge index) indicating one of the merge candidates may be obtained, and a merge candidate indicated by the index may be used as base motion information.

The candidate indices of the motion information candidates may be represented as in the following table.

**[Table 1]**

| **Base candidate IDX** | 0 | 1 | 2 | 3 |
|---|---|---|---|---|
| **N^{th} MVP** | 1^{st} MVP | 2^{nd} MVP | 3^{rd} MVP | 4^{th} MVP |

Referring to Table 1, when the value of the candidate index is 0, the candidate index may indicate a first MVP candidate of the MVP candidates included in the MVP candidate list; when the value of the candidate index is 1, the candidate index may indicate a second MVP candidate of the MVP candidates included in the MVP candidate list; when the value of the candidate index is 2, the candidate index may indicate a third MVP candidate of the MVP candidates included in the MVP candidate list; and when the value of the candidate index is 3, the candidate index may indicate a fourth MVP candidate of the MVP candidates included in the MVP candidate list.

In addition, information for decoding the MVD representing, as the reference, base motion information decoded based on the candidate index and Table 1 may be additionally transmitted. For example, a distance index representing the distance of the MVD may be signaled. The distance of the MVD may be represented as the size of the MVD. The distance of the MVD may be derived based on the value of the distance index and a predetermined LUT. That is, the MVD may be decoded utilizing the distance of the MVD in the LUT, which is referred to by the distance index.

The LUT for the distance of the MVD may be represented as in the following table.

**[Table 2]**

| **Distance IDX** | 0 | 1 | 2 | 3 | 4 | 5 | 6 | 7 |
|---|---|---|---|---|---|---|---|---|
| **Pixel distance** | 1/4-pel | 1/2-pel | 1-pel | 2-pel | 4-pel | 8-pel | 16-pel | 32-pel |

The distance of the MVD corresponding to the value of the distance index may be derived based on the LUT as in Table 2 above. For example, referring to Table 2, when the value of the distance index is 0, the distance of the MVD may be derived as 1/4-pel; when the value of the distance index is 1, the distance of the MVD may be derived as 1/2-pel; when the value of the distance index is 2, the distance of the MVD may be derived as 1-pel; when the value of the distance index is 3, the distance of the MVD may be derived as 2-pel; when the value of the distance index is 4, the distance of the MVD may be derived as 4-pel; when the value of the distance index is 5, the distance of the MVD may be derived as 8-pel; when the value of the distance index is 6, the distance of the MVD may be derived as 16-pel; and when the value of the distance index is 7, the distance of the MVD may be derived as 32-pel.

Also, for example, an index representing the sign of the MVD may be signaled. The sign may represent a direction. That is, a direction index representing the direction of the MVD may be signaled. The direction of the MVD may be derived based on the value of the direction index and a predetermined LUT. That is, the MVD may be decoded utilizing the direction of the MVD in the LUT, which is referred to by the direction index.

The LUT for the direction of the MVD may be represented as in the following table.

**[Table 3]**

| **Direction IDX** | 00 | 01 | 10 | 11 |
|---|---|---|---|---|
| **x-axis** | + | - | N/A | N/A |
| **y-axis** | N/A | N/A | + | - |

The direction of the MVD corresponding to the value of the direction index may be derived based on the LUT as in Table 3 above. For example, referring to Table 3, when the value of the direction index is 00, the direction of the MVD may be derived as a positive direction in the x-axis. When the distance of the MVD is n, the MVD may be derived as (n, 0). Additionally, referring to Table 3, when the value of the direction index is 01, the direction of the MVD may be derived as a negative direction in the x-axis. When the distance of the MVD is n, the MVD may be derived as (-n, 0). Additionally, referring to Table 3, when the value of the direction index is 10, the direction of the MVD may be derived as a positive direction in the y-axis. When the distance of the MVD is n, the MVD may be derived as (0, n). Additionally, referring to Table 3, when the value of the direction index is 11, the direction of the MVD may be derived as a negative direction in the y-axis. When the distance of the MVD is n, the MVD may be derived as (0, -n). Meanwhile, as described above, the MVD may be derived by multiplying the distance of the MVD by the direction, and the positive direction may represent 1 and the negative direction may represent -1. In addition, N/A in Table 3 may represent 0.

As another embodiment of deriving the MVD of the current block by referring to the signaled index and a pre-defined LUT, a method of separately signaling the index for each of the x-axis and y-axis components of the MVD may be proposed. That is, the distance index and the direction index for the x component of the MVD of the current block may be signaled, and the distance index and the direction index for the y component of the MVD of the current block may be signaled.

First, for example, the candidate index for the current block may be signaled. The decoding device may obtain a candidate index indicating one of the motion information candidates of the motion information candidate list derived based on the neighboring block, and may use, as base motion information of the current block, the motion information candidate represented by the candidate index.

The candidate indices of the motion information candidates may be represented as in the following table.

**[Table 4]**

| **Base candidate IDX** | 0 | 1 | 2 | 3 |
|---|---|---|---|---|
| **N^{th} MVP** | 1^{st} MVP | 2^{nd} MVP | 3^{rd} MVP | 4^{th} MVP |

Referring to Table 4, when the value of the candidate index is 0, the candidate index may indicate a first MVP candidate of the MVP candidates included in the MVP candidate list; when the value of the candidate index is 1, the candidate index may indicate a second MVP candidate of the MVP candidates included in the MVP candidate list; when the value of the candidate index is 2, the candidate index may indicate a third MVP candidate of the MVP candidates included in the MVP candidate list; and when the value of the candidate index is 3, the candidate index may indicate a fourth MVP candidate of the MVP candidates included in the MVP candidate list.

Furthermore, for example, an index representing the distance of the x component of the MVD may be signaled. The index may be represented as an x-component distance index. The distance of the x component of the MVD may be represented as the size of the x component of the MVD. The distance of the x component of the MVD may be derived based on the value of the x-component distance index and a predetermined LUT. That is, the MVD may be decoded utilizing the distance of the x component of the MVD in the LUT, which is referred to by the x-component distance index.

The LUT for the distance of the x component of the MVD may be represented as in the following table.

**[Table 5]**

| **Distance IDX_X** | 0 | 1 | 2 | 3 |
|---|---|---|---|---|
| **Pixel distance** | 1/4-pel | 1/2-pel | 1-pel | 4-pel |

The distance of the x component of the MVD corresponding to the value of the x-component distance index may be derived based on the LUT as in Table 5 above. For example, referring to Table 5, when the value of the x-component distance index is 0, the distance of the MVD may be derived as 1/4-pel; when the value of the x-component distance index is 1, the distance of the MVD may be derived as 1/2-pel; when the value of the x-component distance index is 2, the distance of the MVD may be derived as 1-pel; and when the value of the x-component distance index is 3, the distance of the MVD may be derived as 4-pel.

Furthermore, for example, an index representing the distance of the y component of the MVD may be signaled. The index may be represented as a y-component distance index. The distance of the y component of the MVD may be represented as the size of the y component of the MVD. The distance of the y component of the MVD may be derived based on the value of the y-component distance index and a predetermined LUT. That is, the MVD may be decoded utilizing the distance of the y component of the MVD in the LUT, which is referred to by the y-component distance index.

The LUT for the distance of the y component of the MVD may be represented as in the following table.

**[Table 6]**

| **Distance IDX_Y** | 0 | 1 | 2 | 3 |
|---|---|---|---|---|
| **Pixel distance** | 1/4-pel | 1/2-pel | 1-pel | 4-pel |

The distance of the y component of the MVD corresponding to the value of the y-component distance index may be derived based on the LUT as in Table 6 above. For example, referring to Table 6, when the value of the y-component distance index is 0, the distance of the y component of the MVD may be derived as 1/4-pel; when the value of the y-component distance index is 1, the distance of the y component of the MVD may be derived as 1/2-pel; when the value of the y-component distance index is 2, the distance of the y component of the MVD may be derived as 1-pel; and when the value of the y-component distance index is 3, the distance of the y component of the MVD may be derived as 4-pel.

Also, for example, an index representing the sign of the x component of the MVD may be signaled. The sign may represent a direction. That is, the x-component direction index representing the direction of the x component of the MVD may be signaled. The direction of the x component of the MVD may be derived based on the value of the x-component direction index and a predetermined LUT. That is, the MVD may be decoded utilizing the direction of the x component of the MVD in the LUT, which is referred to by the x-component direction index.

The LUT for the direction of the x component of the MVD may be represented as in the following table.

**[Table 7]**

| **Direction IDX_X** | 0 | 1 |
|---|---|---|
| **axis** | + | - |

The direction of the x component of the MVD corresponding to the value of the x-component direction index may be derived based on the LUT as in Table 7 above. For example, referring to Table 7, when the value of the x-component direction index is 0, the direction of the x component of the MVD may be derived as a positive direction. When the distance of the x component of the MVD is n, the x component of the MVD may be derived as n. Additionally, referring to Table 7, when the value of the x-component direction index is 1, the direction of the x component of the MVD may be derived as a negative direction. When the distance of the x component of the MVD is n, the x component of the MVD may be derived as -n.

Also, for example, an index representing the sign of the y component of the MVD may be signaled. The sign may represent a direction. That is, the y-component direction index representing the direction of the y component of the MVD may be signaled. The direction of the y component of the MVD may be derived based on the value of the y-component direction index and a predetermined LUT. That is, the MVD may be decoded utilizing the direction of the y component of the MVD in the LUT, which is referred to by the y-component direction index.

The LUT for the direction of the y component of the MVD may be represented as in the following table.

**[Table 8]**

| **Direction IDX_Y** | 0 | 1 |
|---|---|---|
| **axis** | + | - |

The direction of the y component of the MVD corresponding to the value of the y-component direction index may be derived based on the LUT as in Table 8 above. For example, referring to Table 8, when the value of the y-component direction index is 0, the direction of the y component of the MVD may be derived as a positive direction. When the distance of the y component of the MVD is n, the y component of the MVD may be derived as n. Additionally, referring to Table 8, when the value of the y-component direction index is 1, the direction of the y component of the MVD may be derived as a negative direction. When the distance of the y component of the MVD is n, the y component of the MVD may be derived as -n.

Meanwhile, the present disclosure proposes a method of using the same candidate list for unification with a merge candidate list when deriving the MVP candidate list for the current block. That is, neighboring blocks for deriving the MVP candidate list may be the same as neighboring blocks for deriving the merge candidate list.

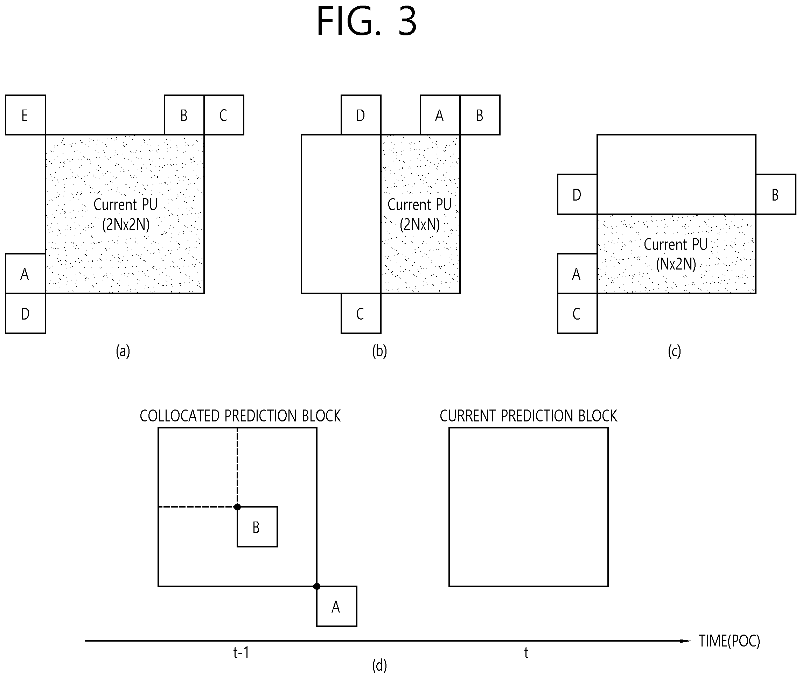

FIG. 3 illustratively represents a neighboring block referred to in order to derive a merge candidate in a merge mode.

FIGS. 3A to 3C may represent spatial neighboring blocks, and FIG. 3D may represent temporal neighboring blocks. The merge candidate list of the current block may be constructed based on motion information of the spatial neighboring blocks and temporal neighboring blocks. For example, the decoding device may construct the merge candidate list by deriving the motion information of the spatial neighboring blocks and the temporal neighboring blocks as merge candidates. In addition, the MVP candidate list may also be constructed based on the motion information of the spatial and temporal neighboring blocks.

Referring to FIG. 3A, when the size of the current block is 2Nx2N, the spatial neighboring blocks may include a left neighboring block, a top neighboring block, an top-right corner neighboring block, a bottom-left corner neighboring block, and/or a top-left corner neighboring block. If the size of the current block is 2Nx2N, and an x component of the top-left sample position of the current block is 0 and a y component thereof is 0, then the left neighboring block may be a block including a sample at coordinates (-1, 2N-1); the top neighboring block may be a block including a sample at coordinates (2N-1, -1); the top-right corner neighboring block may be a block including a sample at coordinates (2N, -1); the bottom-left corner neighboring block may be a block including a sample at coordinates (-1, 2N); and the top-left corner neighboring block may be a block including a sample at coordinates (-1, -1).

Referring to FIG. 3B, when the size of the current block is 2NxN, the spatial neighboring blocks may include a top neighboring block, an top-right corner neighboring block, a bottom-left corner neighboring block, and/or a top-left corner neighboring block. If the size of the current block is 2NxN, and an x component of the top-left sample position of the current block is 0 and a y component thereof is 0, then the top neighboring block may be a block including a sample at coordinates (N-1, -1); the top-right corner neighboring block may be a block including a sample at coordinates (N, -1); the bottom-left corner neighboring block may be a block including a sample at coordinates (-1, 2N); and the top-left corner neighboring block may be a block including a sample at coordinates (-1, -1).

Referring to FIG. 3C, when the size of the current block is Nx2N, the spatial neighboring blocks may include a left neighboring block, an top-right corner neighboring block, a bottom-left corner neighboring block, and/or a top-left corner neighboring block. If the size of the current block is Nx2N, and an x component of the top-left sample position of the current block is 0 and a y component thereof is 0, then the left neighboring block may be a block including a sample at coordinates (-1, N-1); the top-right corner neighboring block may be a block including a sample at coordinates (2N, -1); the bottom-left corner neighboring block may be a block including a sample at coordinates (-1, N); and the top-left corner neighboring block may be a block including a sample at coordinates (-1, -1).

Referring to FIG. 3D, the temporal neighboring blocks may include a center bottom-right block of the collocated block of the current block in a collocated picture and/or a bottom-right corner neighboring block of the collocated block. The collocated block may represent a block located at a position in the collocated picture corresponding to the position of the current block.

Furthermore, in order to more efficiently share merge candidates, the present disclosure may propose a method as an example, which includes determining whether to use the method of deriving the MVD based on the above-described additional information (i.e., index information) depending on the type of merge candidate, and adaptively parsing the syntax information. For example, in the existing merge mode, merge candidates having different motion information may exist as subblocks, and the decoding device may perform prediction using the motion information. That is, the existing merge mode may include a mode in which a merge candidate representing subblock unit motion information is derived, and subblock unit motion information of the current block is derived based on the merge candidate. In this case, since the method for deriving an MVD based on additional information (i.e., index information) proposed by the present disclosure may not operate efficiently, the proposed method may not be applied in the above-mentioned case, and thus, syntax information may be adaptively signaled. For example, when the method of deriving an MVD based on the additional information (i.e., index information) is used, a method of deriving a merge candidate indicating subblock unit motion information may not be used.

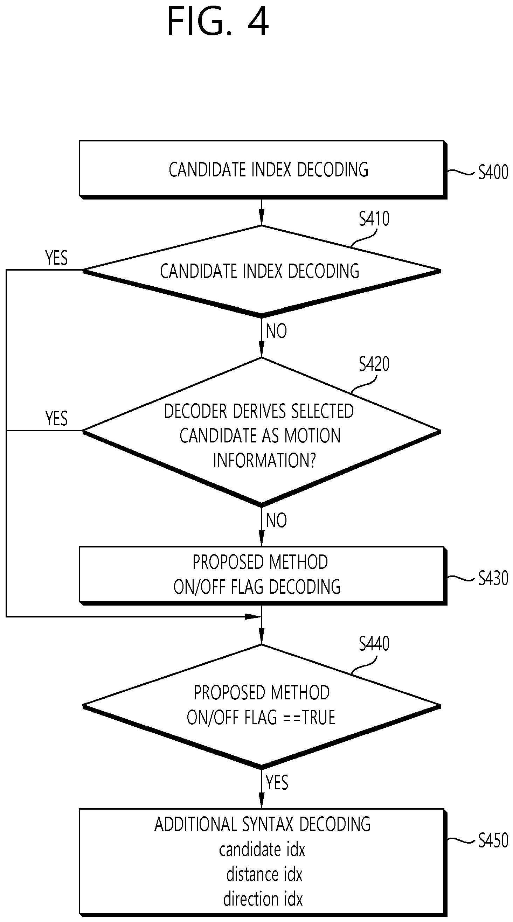

FIG. 4 represents an example of applying the above-described method of deriving an MVD based on additional information.

The decoding device may decode the candidate index (S400). The decoding device may construct a motion information candidate list based on a neighboring block of the current block, and may decode the candidate index indicating one of the motion information candidates of the motion information candidate list. The decoding device may select a motion information candidate indicated by the candidate index.

The decoding device may determine whether the selected motion information candidate is subblock unit motion information (S410). The decoding device may determine whether subblock unit motion information is derived for the current block based on the selected motion information candidate.

When the selected motion information candidate is not subblock unit motion information, the decoding device may determine whether the motion information of the current block is derived based on the selected motion information candidate (S420).

When the motion information of the current block is not derived, the decoding device may decode flag information representing whether to derive an MVD based on additional information proposed in the present disclosure (S430), and may determine based on the flag information whether to derive the MVD based on the additional information (S440).

When it is determined based on the flag information that the MVD is derived based on the additional information, the decoding device may decode the additional syntax information (S450). The additional syntax information may include the above-described candidate index, distance index, and/or direction index. Thereafter, the MVD of the current block may be derived based on the information and a predetermined LUT, and motion information on the current block may be derived based on the MVD and base motion information.

In addition, the present disclosure proposes another embodiment of the LUT for the distance of the MVD. For example, by allowing the motion information to which the MVD has been added to indicate only a position near the surroundings, the merge can be performed more efficiently.

The LUT for the distance of the x component of the MVD may be represented as in the following table.

**[Table 9]**

| **Distance IDX_X** | 0 | 1 | 2 | 3 |
|---|---|---|---|---|
| **Pixel distance** | 1/4-pel | 1/2-pel | 3/4-pel | 1-pel |

The distance of the x component of the MVD corresponding to the value of the x-component distance index may be derived based on the LUT as in Table 9 above. For example, referring to Table 9, when the value of the x-component distance index is 0, the distance of the x component of the MVD may be derived as 1/4-pel; when the value of the x-component distance index is 1, the distance of the x component of the MVD may be derived as 1/2-pel; when the value of the x-component distance index is 2, the distance of the x component of the MVD may be derived as 3/4-pel; and when the value of the x-component distance index is 3, the distance of the x component of the MVD may be derived as 1-pel.

Furthermore, the LUT for the distance of the y component of the MVD may be represented as in the following table.

**[Table 10]**

| **Distance IDX_Y** | 0 | 1 | 2 | 3 |
|---|---|---|---|---|
| **Pixel distance** | 1/4-pel | 1/2-pel | 3/4-pel | 1-pel |

The distance of the y component of the MVD corresponding to the value of the y-component distance index may be derived based on the LUT as in Table 10 above. For example, referring to Table 10, when the value of the y-component distance index is 0, the distance of the MVD may be derived as 1/4-pel; when the value of the y-component distance index is 1, the distance of the MVD may be derived as 1/2-pel; when the value of the y-component distance index is 2, the distance of the MVD may be derived as 3/4-pel; and when the value of the y-component distance index is 3, the distance of the MVD may be derived as 1-pel.

In addition, according to the present disclosure, an LUT for maximizing the effect of AMVR may be proposed as another embodiment of the LUT for the distance of the MVD.

For example, the LUT for the distance of the x component of the MVD may be represented as in the following table.

**[Table 11]**

| | | | | |
|---|---|---|---|---|
| **Distance IDX_X** | 0 | 1 | 2 | 3 |
| **Pixel distance** | 1-pel | 2-pel | 4-pel | 8-pel |

The distance of the x component of the MVD corresponding to the value of the x-component distance index may be derived based on the LUT as in Table 11 above. For example, referring to Table 11, when the value of the x-component distance index is 0, the distance of the x component of the MVD may be derived as 1-pel; when the value of the x-component distance index is 1, the distance of the x component of the MVD may be derived as 2-pel; when the value of the x-component distance index is 2, the distance of the x component of the MVD may be derived as 4-pel; and when the value of the x-component distance index is 3, the distance of the x component of the MVD may be derived as 8-pel.

Furthermore, for example, the LUT for the distance of the y component of the MVD may be represented as in the following table.

**[Table 12]**

| | | | | |
|---|---|---|---|---|
| **Distance IDX_Y** | 0 | 1 | 2 | 3 |
| **Pixel distance** | 1-pel | 2-pel | 4-pel | 8-pel |

The distance of the y component of the MVD corresponding to the value of the y-component distance index may be derived based on the LUT as in Table 12 above. For example, referring to Table 12, when the value of the y-component distance index is 0, the distance of the y component of the MVD may be derived as 1-pel; when the value of the y-component distance index is 1, the distance of the y component of the MVD may be derived as 2-pel; when the value of the y-component distance index is 2, the distance of the y component of the MVD may be derived as 4-pel; and when the value of the y-component distance index is 3, the distance of the y component of the MVD may be derived as 8-pel.

In addition, in addition to the above-described LUT, various pre-defined MVD LUTs may be used based on a probability of occurrence of a distance. For example, the MVD LUT may be signaled through a high level. The high level may represent a video parameter set (VPS), a sequence parameter set (SPS), a picture parameter set (PPS), a slice segment header, a coding unit header or the like. In addition, flag information representing whether to use the same LUT as used in the previous frame may be signaled at the frame or slice level, and it may be determined based on the flag information whether the same LUT as used in the previous frame in the corresponding frame or the corresponding slice is used. When it is determined that the same LUT as used in the previous frame is used, the LUT may be referenced in the corresponding frame or the corresponding slice.

Furthermore, as an embodiment, when the method of deriving an MVD based on the additional information as described above is used, a method in which the AMVR is not used in the AMVP mode may be proposed. Most of the blocks to which the AMVR is applied may be homogenous blocks, or blocks in which MVD is large due to a large movement of an object. In this case, the block has an inaccurate motion vector position than that represented by a fractional-pel, but the worst-case may be covered by the AMVR, through which the compression performance may be improved. Therefore, when the method of deriving an MVD based on additional information as described above is applied, the AMVR for the AMVP mode may not be used and the flag indicating whether the AMVR is used may not be signaled in order to reduce the bit overhead, because there is a conflict between the method of deriving an MVD based on additional information as above-described, and the AMVR.

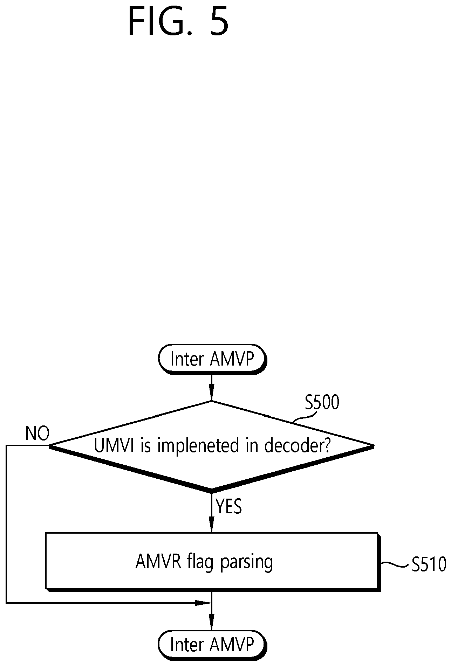

FIG. 5 represents an example of applying the AMVR and the method of deriving an MVD based on additional information as described above.

The decoding device may derive an MVD based on the above-described additional information, and determine whether a method of deriving motion information of the current block based on the MVD and base motion information is applied (S500). The method which includes deriving an MVD based on the above-described additional information and deriving motion information of the current block based on the MVD and base motion information may be represented as unified signaling for motion vector information (UMVI). Alternatively, the UMVI may be represented as MMVD (Merge with MVD).

When the UMVI is not applied, the decoding device may parse the AMVR flag representing whether the AMVR is applied (S510).

When the UMVI is applied, the decoding device may perform inter prediction on the current block based on the motion information derived based on the MVD and base motion information.

Furthermore, as an embodiment, a method which includes signaling the LUT through the high level, and referring to the LUT by a slice or picture following the LUT, and a decoding unit (e.g., tile) for parallel processing may be proposed. In addition, a method of managing whether a previously signaled LUT is used as it is or a new LUT is signaled and used may be proposed.

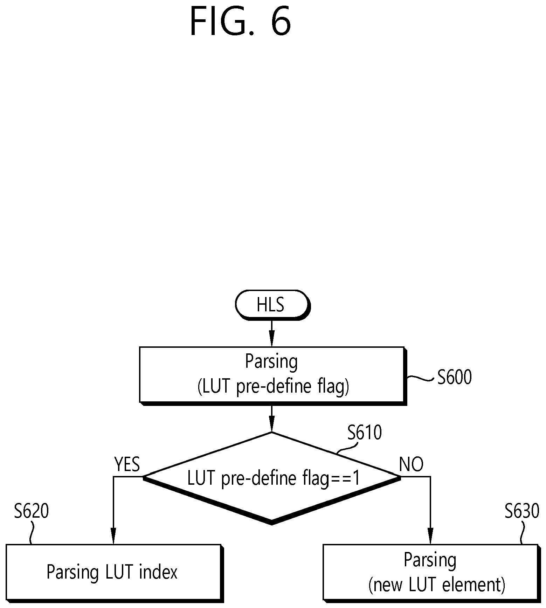

FIG. 6 represents an example of deriving an LUT.

For example, an initial LUT may be fixed in advance to the decoding device. That is, at least one LUT may be pre-defined in the decoding device.

Referring to FIG. 6, the decoding device may parse a flag representing whether a pre-defined LUT exists (S600). The flag may be represented as an LUT pre-define flag. The decoding device may determine whether the value of the flag is 1, that is, whether the flag represents that a predefined LUT exists (S610).

When the value of the flag is 1, that is, when the flag represents that a pre-defined LUT exists, the decoding device may parse an index indicating the LUT (S620). The index may indicate one of the pre-defined LUTs. The index may be represented as an LUT index. The decoding device may apply the LUT indicated by the index as an LUT for a current region, and when additional information on a block included in the current region is signaled, the MVD of the block may be derived based on the additional information and the LUT for the current region. The current region may be a picture, tile, or slice. The LUT pre-define flag and/or the LUT index may be signaled through a high level syntax. The high level syntax may represent a video parameter set (VPS), a sequence parameter set (SPS), a picture parameter set (PPS), a slice segment header, a coding unit header or the like. The high level syntax may be referred to as a high level.

Furthermore, when the value of the flag is 0, that is, when the flag represents that a pre-defined LUT does not exist, the decoding device may parse information on new LUT elements (S630).

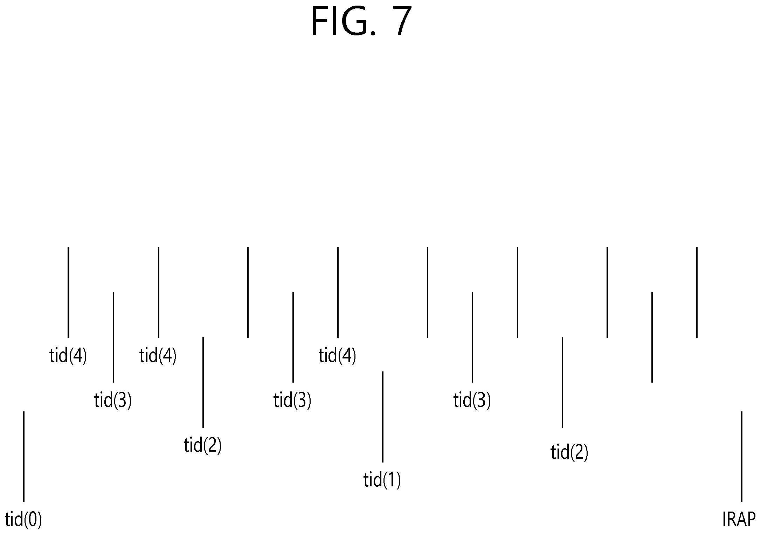

FIG. 7 illustratively represent a random access structure. FIG. 7 may represent an encoding/decoding order of frames. Also, the top and bottom positions of the frame may represent a temporal layer in which the corresponding frame is included. For example, tid(n) may represent a temporal layer ID of a corresponding frame. For a random access structure as illustrated in FIG. 7, a reference LUT for each temporal layer may be separately managed.

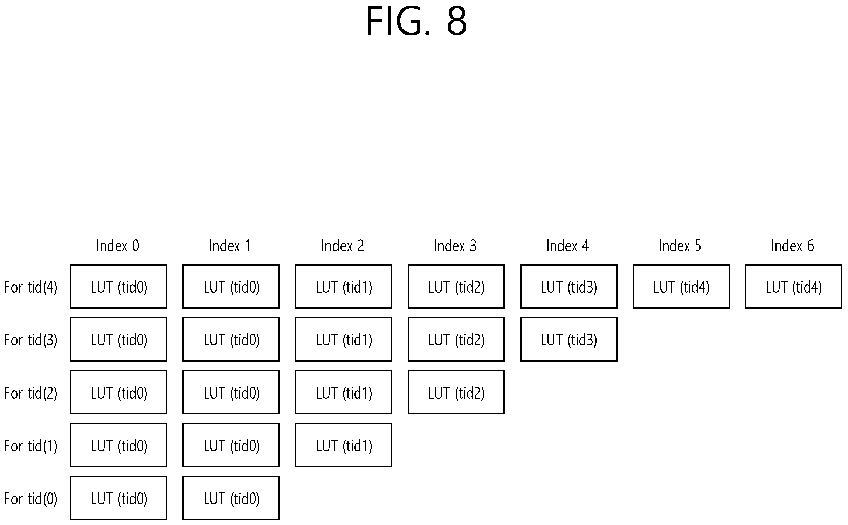

FIG. 8 illustratively represent a reference LUT for a temporal layer. For example, as illustrated in FIG. 8, the LUT for the temporal layer may be predetermined.

Meanwhile, the present disclosure proposes a method of refreshing a reference LUT in an intra random access point (IRAP) picture in order to maintain a random access point.

In addition, as an example, a method which includes setting additionally a maximum number of LUT candidates for each temporal layer, and managing the LUT within the maximum number of LUT candidates may be proposed. For example, when an LUT exceeding the maximum number of LUT candidates for the temporal layer is derived, the LUT having the lowest selection probability may be removed from the reference structure, that is, the LUT candidates of the temporal layer.

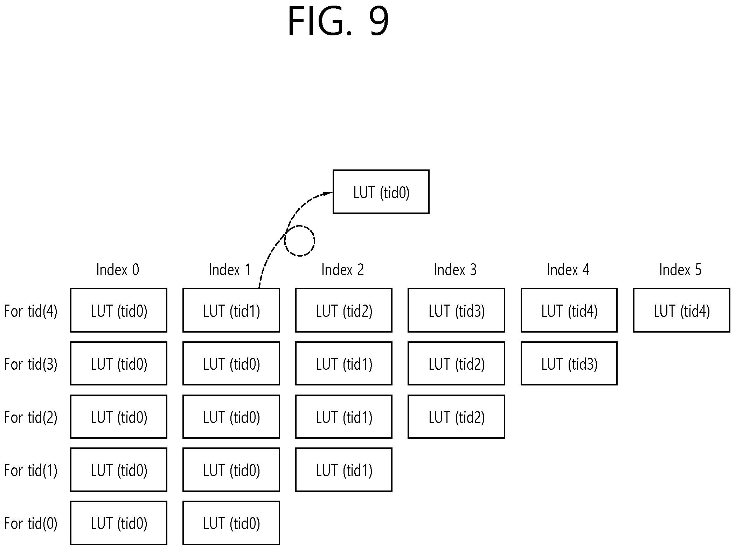

FIG. 9 represents an example of managing an LUT candidate for a temporal layer. Referring to FIG. 9, the maximum number of LUT candidates may be six. Referring to FIG. 9, 7 LUTs are derived as LUT candidates for a temporal layer having a temporal layer ID of 4, and thus the LUT having the lowest selection probability may be removed from the LUT candidates for the temporal layer.

In addition, as an example, a method which includes reordering the LUT order in the LUT reference structure of each temporal layer based on a selection probability when a picture is additionally decoded is proposed.

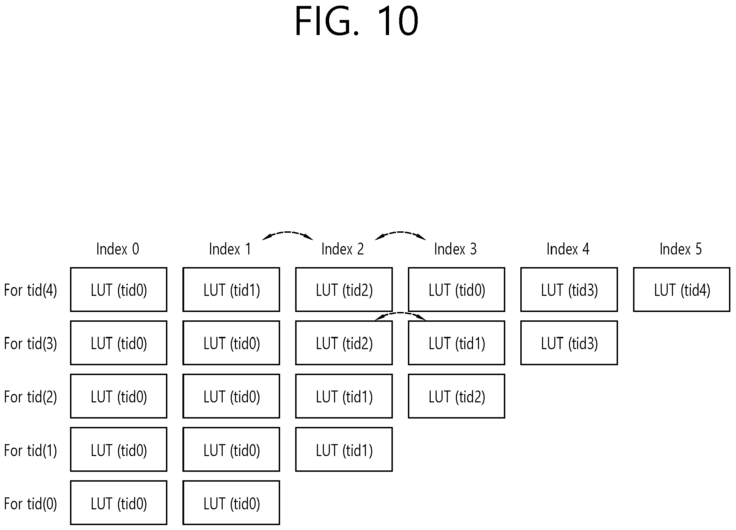

FIG. 10 represents an example of reordering LUT candidates for a temporal layer. Referring to FIG. 10, the order of LUT candidates in the LUT reference structure for each temporal layer may be changed based on a selection probability. Through this, LUTs having a high selection probability can be reordered to a smaller index, and the advantage of allocating fewer bits to the index for deriving the LUT may be achieved.

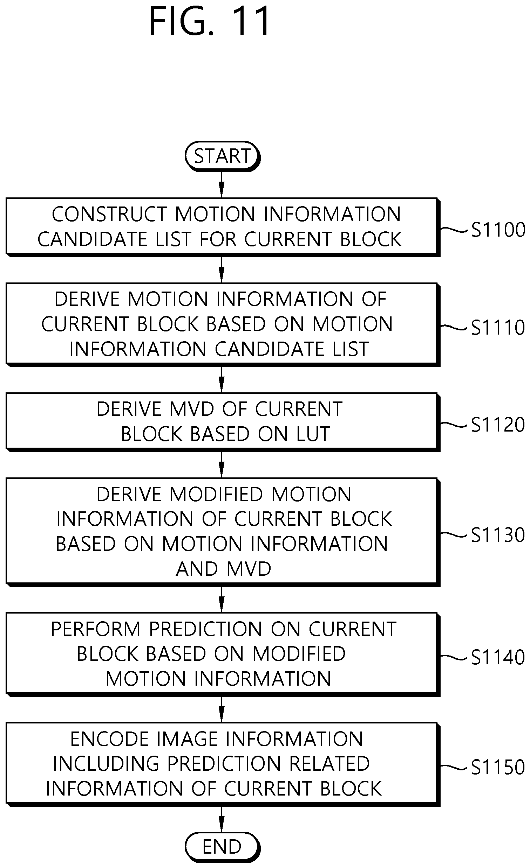

FIG. 11 schematically represents an image encoding method by an encoding device according to the present disclosure. The method disclosed in FIG. 11 may be performed by the encoding device disclosed in FIG. 1. Specifically, for example, S1100 to S1140 in FIG. 11 may be performed by the predictor of the encoding device, and S1150 may be performed by the entropy encoder of the encoding device. Further, although not shown, the process of deriving the residual sample for the current block based on the prediction sample and the original sample for the current block may be performed by the subtractor of the encoding device, and the process of generating information on residual for the current block based on the residual sample may be performed by the transformer of the encoding device, and the process of encoding image information including the information on residual may be performed by the entropy encoder of the encoding device.

The encoding device constructs a motion information candidate list for the current block (S1100). The encoding device may construct a motion information candidate list for the current block based on spatial neighboring blocks and/or temporal neighboring blocks of the current block. For example, motion information of the spatial neighboring blocks and/or the temporal neighboring blocks may be derived as a motion information candidate for the current block, and the motion information candidate list including the motion information candidate may be constructed. Meanwhile, the motion information candidate list may represent a merge candidate list or an MVP candidate list, and the motion information candidate may represent a merge candidate or an MVP candidate. Also, for example, the MVP candidate list may be constructed in the same way as the merge candidate list.

Furthermore, for example, when the size of the current block is 2Nx2N, the spatial neighboring blocks may include a left neighboring block, a top neighboring block, an top-right corner neighboring block, a bottom-left corner neighboring block, and/or a top-left corner neighboring block. If the size of the current block is 2Nx2N, and an x component of the top-left sample position of the current block is 0 and a y component thereof is 0, then the left neighboring block may be a block including a sample at coordinates (-1, 2N-1); the top neighboring block may be a block including a sample at coordinates (2N-1, -1); the top-right corner neighboring block may be a block including a sample at coordinates (2N, -1); the bottom-left corner neighboring block may be a block including a sample at coordinates (-1, 2N); and the top-left corner neighboring block may be a block including a sample at coordinates (-1, -1).

Furthermore, for example, when the size of the current block is 2NxN, the spatial neighboring blocks may include a top neighboring block, an top-right corner neighboring block, a bottom-left corner neighboring block, and/or a top-left corner neighboring block. If the size of the current block is 2NxN, and an x component of the top-left sample position of the current block is 0 and a y component thereof is 0, then the top neighboring block may be a block including a sample at coordinates (N-1, -1); the top-right corner neighboring block may be a block including a sample at coordinates (N, -1); the bottom-left corner neighboring block may be a block including a sample at coordinates (-1, 2N); and the top-left corner neighboring block may be a block including a sample at coordinates (-1, -1).

Furthermore, for example, when the size of the current block is Nx2N, the spatial neighboring blocks may include a left neighboring block, an top-right corner neighboring block, a bottom-left corner neighboring block, and/or a top-left corner neighboring block. If the size of the current block is Nx2N, and an x component of the top-left sample position of the current block is 0 and a y component thereof is 0, then the left neighboring block may be a block including a sample at coordinates (-1, N-1); the top-right corner neighboring block may be a block including a sample at coordinates (2N, -1); the bottom-left corner neighboring block may be a block including a sample at coordinates (-1, N); and the top-left corner neighboring block may be a block including a sample at coordinates (-1, -1).

Furthermore, for example, the temporal neighboring blocks may include a center bottom-right block of the collocated block of the current block in a collocated picture and/or a bottom-right corner neighboring block of the collocated block. The collocated block may represent a block located at a position in the collocated picture corresponding to the position of the current block.

The encoding device derives motion information of the current block based on the motion information candidate list (S 1110). The encoding device may select a specific motion information candidate from among motion information candidates in the motion information candidate list, and derive the selected motion information candidate as motion information on the current block. In addition, the encoding device may generate and encode a candidate index indicating the selected motion information candidate among the motion information candidates in the motion information candidate list. The candidate index may indicate the selected motion information candidate of the motion information candidates.

The encoding device derives the MVD of the current block based on a look-up table (LUT) (S1120). The encoding device may derive the MVD of the current block based on the LUT.

For example, the encoding device may derive the distance of the MVD from the LUT for the MVD distance, and derive the direction of the MVD from the LUT for the MVD direction. In this case, index information on the MVD may be generated and encoded, and the index information may include a distance index and a direction index for the MVD. The distance index may represent the distance of the MVD in the LUT for MVD distance, and the direction index may represent the direction of the MVD in the LUT for an MVD direction. That is, the distance of the MVD may be derived as the distance indicated by the value of the distance index in the LUT for MVD distance, and the direction of the MVD may be derived as a direction indicated by the value of the direction index in the LUT for an MVD direction.

Here, the LUT for MVD distance may be the same as Table 2 above. For example, when the value of the distance index in the LUT is 0, the distance of the MVD may be derived as 1/4-pel; when the value of the distance index is 1, the distance of the MVD may be derived as 1/2-pel; when the value of the distance index is 2, the distance of the MVD may be derived as 1-pel; when the value of the distance index is 3, the distance of the MVD may be derived as 2-pel; when the value of the distance index is 4, the distance of the MVD may be derived as 4-pel; when the value of the distance index is 5, the distance of the MVD may be derived as 8-pel; when the value of the distance index is 6, the distance of the MVD may be derived as 16-pel; and when the value of the distance index is 7, the distance of the MVD may be derived as 32-pel.

In addition, the LUT for an MVD direction may be the same as Table 3 above. For example, when the binary value of the direction index in the LUT is 00, the direction of the MVD may be derived as a positive direction in the x-axis; when the binary value of the direction index is 01, the direction of the MVD may be derived as a negative direction in the x-axis; when the binary value of the direction index is 10, the direction of the MVD may be derived as a positive direction in the y-axis; and when the binary value of the direction index is 11, the direction of the MVD may be derived as a negative direction in the y-axis. Here, the MVD may be derived by multiplying the distance of the MVD by the direction, and the positive direction may represent 1 and the negative direction may represent -1. In addition, N/A in Table 3 may represent 0.

In addition, for example, the encoding device may derive the distance of the x component of the MVD from the LUT for MVD x-component distance, derive the direction of the x component of the MVD from the LUT for MVD x-component direction, derive the distance of the y component of the MVD from the LUT for MVD y-component distance, and derive the direction of the y component of the MVD from the LUT for MVD y-component direction. In this case, index information on the MVD may be generated and encoded, and the index information may include the distance index for the x component of the MVD, the direction index for the x component, the distance index for the y component of the MVD, and the direction index for the y component. The distance index for the x component may represent the distance of the x component of the MVD in the LUT for MVD x-component distance, the direction index for the x component may represent the direction of the x component of the MVD in the LUT for MVD x-component direction, the distance index for the y component may represent the distance of the y component of the MVD in the LUT for MVD y-component distance, and the direction index for the y component may represent the direction of the y component of the MVD in the LUT for MVD y-component direction. That is, the distance of the x component of the MVD may be derived as the distance indicated by the value of the distance index for the x component in the LUT for MVD x-component distance, and the direction of the x component of the MVD may be derived as the direction indicated by the value of the direction index for the x component in the LUT for MVD x-component direction, and the distance of the y component of the MVD may be derived as the distance indicated by the value of the distance index for the y component in the LUT for MVD y-component distance, and the direction of the y component of the MVD may be derived as the direction indicated by the value of the direction index for the y component in the LUT for MVD y-component direction.

Here, the LUT for MVD x-component distance may be the same as Table 5, Table 9, or Table 11 above. For example, when the value of the distance index for the x component in the LUT is 0, the distance of the x component of the MVD may be derived as 1/4-pel; when the value of the distance index for the x component is 1, the distance of the x component of the MVD may be derived as 1/2-pel; when the value of the distance index for the x component is 2, the distance of the x component of the MVD may be derived as 1-pel; and when the value of the distance index for the x component is 3, the distance of the x component of the MVD may be derived as 4-pel. Alternatively, for example, when the value of the distance index for the x component in the LUT is 0, the distance of the x component of the MVD may be derived as 1/4-pel; when the value of the distance index for the x component is 1, the distance of the x component of the MVD may be derived as 1/2-pel; when the value of the distance index for the x component is 2, the distance of the x component of the MVD may be derived as 3/4-pel; and when the value of the distance index for the x component is 3, the distance of the x component of the MVD may be derived as 1-pel. Alternatively, for example, when the value of the distance index for the x component in the LUT is 0, the distance of the x component of the MVD may be derived as 1-pel; when the value of the distance index for the x component is 1, the distance of the x component of the MVD may be derived as 2-pel; when the value of the distance index for the x component is 2, the distance of the x component of the MVD may be derived as 4-pel; and when the value of the distance index for the x component is 3, the distance of the x component of the MVD may be derived as 8-pel.

Furthermore, the LUT for MVD y-component distance may be the same as Table 6, Table 10, or Table 12 above. For example, when the value of the distance index for the y component in the LUT is 0, the distance of the y component of the MVD may be derived as 1/4-pel; when the value of the distance index for the y component is 1, the distance of the y component of the MVD may be derived as 1/2-pel; when the value of the distance index for the y component is 2, the distance of the y component of the MVD may be derived as 1-pel; and when the value of the distance index for the y component is 3, the distance of the y component of the MVD may be derived as 4-pel. Alternatively, for example, when the value of the distance index for the y component in the LUT is 0, the distance of the y component of the MVD may be derived as 1/4-pel; when the value of the distance index for the y component is 1, the distance of the y component of the MVD may be derived as 1/2-pel; when the value of the distance index for the y component is 2, the distance of the y component of the MVD may be derived as 3/4-pel; and when the value of the distance index for the y component is 3, the distance of the y component of the MVD may be derived as 1-pel. Alternatively, for example, when the value of the distance index for the y component in the LUT is 0, the distance of the y component of the MVD may be derived as 1-pel; when the value of the distance index for the y component is 1, the distance of the y component of the MVD may be derived as 2-pel; when the value of the distance index for the y component is 2, the distance of the y component of the MVD may be derived as 4-pel; and when the value of the distance index for the y component is 3, the distance of the y component of the MVD may be derived as 8-pel.

In addition, the LUT for an MVD x-component direction may be the same as Table 7 above. For example, when the value of the direction index for the x component in the LUT is 0, the direction of the x component of the MVD may be derived as a positive direction; and when the value of the direction index for the x component is 1, the direction of the x component of the MVD may be derived as a negative direction.

In addition, the LUT for an MVD y-component direction may be the same as Table 8 above. For example, when the value of the direction index for the y component in the LUT is 0, the direction of the y component of the MVD may be derived as a positive direction; and when the value of the direction index for the y component is 1, the direction of the y component of the MVD may be derived as a negative direction.

Meanwhile, for example, the LUT may be predetermined.

Alternatively, for example, the LUT may be obtained through a bitstream. The LUT may be signaled through the high level syntax. The high level syntax may represent a video parameter set (VPS), a sequence parameter set (SPS), a picture parameter set (PPS), a slice segment header, a coding unit header or the like.

Alternatively, for example, a specific LUT candidate may be selected from among LUT candidates for a temporal layer of the current picture, and the selected LUT candidate may be derived as the LUT. In this case, an LUT index indicating the selected LUT candidate may be generated and encoded. Also, a flag representing whether the LUT candidates exist may be generated and encoded. In addition, a flag representing whether a previously used LUT is used may be generated and encoded. Meanwhile, for example, when there are more LUT candidates than the maximum number of LUT candidates for the temporal layer at the time when the current picture is encoded, one of the LUT candidates having the lowest selection probability may be removed. In addition, for example, the LUT candidates may be reordered in order of decreasing selection probability.

The encoding device derives modified motion information of the current block based on the motion information and the MVD (S1130). The encoding device may derive modified motion information of the current block based on the motion information and the MVD. For example, the modified motion information may include a modified motion vector, and the modified motion vector may be derived through addition of the motion vector of the motion information and the MVD.

The encoding device performs prediction on the current block based on the modified motion information (S1140). The prediction block of the current block may be derived based on the modified motion information, and a reconstructed block may be derived based on the prediction block. Specifically, the encoding device may derive the reference block in the reference picture based on the modified motion information. The modified motion information may include the modified motion vector and a reference picture index. The encoding device may derive, as the reference picture of the current block, one of the reference pictures of the reference picture list, which the reference picture index indicates, and may derive, as the reference block of the current block, the block in the reference picture, which the modified motion vector indicates. The encoding device may generate the prediction sample based on the reference block.

Further, the encoding device may generate the residual sample based on the original sample and the generated prediction sample. The encoding device may generate the information on residual based on the residual sample. The information on residual may include transform coefficients relating to the residual sample. The encoding device may derive the reconstruction sample based on the prediction sample and the residual sample. That is, the encoding device may derive the reconstruction sample by adding the prediction sample to the residual sample. Further, the encoding device may encode the information on residual and output the encoded information in the form of a bitstream. The bitstream may be transmitted to the decoding device through a network or a storage medium.

The encoding device encodes image information including prediction related information of the current block (S1150). The encoding device may encode image information including prediction related information of the current block and output the encoded image information in the form of a bitstream. The bitstream may be transmitted to the decoding device through a network or a storage medium. For example, the encoding device may determine a prediction mode of the current block, and generate information representing the prediction mode.

Furthermore, the encoding device may encode a flag representing whether the prediction mode for deriving a motion vector difference (MVD) based on a look-up table (LUT) and index information on the MVD is applied. The prediction related information may include the flag.

In addition, for example, the prediction related information may include a candidate index indicating the selected motion information candidate among the motion information candidates in the motion information candidate list. Also, for example, the prediction related information may include index information on the MVD. The index information may include a distance index and a direction index for the MVD. Alternatively, the index information may include a distance index for the x component of the MVD, a direction index for the x component, a distance index for the y component of the MVD, and a direction index for the y component. Further, for example, the image information may include an LUT index indicating a selected one among the LUT candidates. In addition, the image information may include a flag representing whether the LUT candidates exist. Further, the image information may include a flag representing whether a previously used LUT is used. Further, the encoding device may generate the information on residual based on the residual sample. The image information may include information on residual, and the information on residual may include transform coefficients relating to the residual sample. The encoding device may encode the information on residual and output the encoded information in the form of a bitstream. The bitstream may be transmitted to the decoding device through a network or a storage medium.

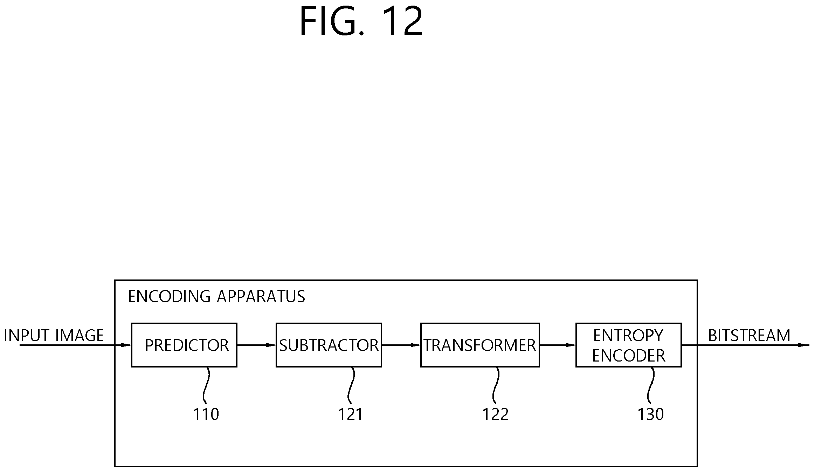

FIG. 12 schematically represents an encoding device performing an image encoding method according to the present disclosure. The method disclosed in FIG. 11 may be performed by the encoding device disclosed in FIG. 12. Specifically, for example, a predictor of the encoding device of FIG. 12 may perform S1100 to S1140 in FIG. 11; and the entropy encoder of the encoding device of FIG. 12 may perform S1150 in FIG. 11. Further, although not shown, the process of deriving the residual sample for the current block based on the prediction sample and the original sample for the current block may be performed by the subtractor of the encoding device of FIG. 12, the process of generating information on residual for the current block based on the residual sample may be performed by the transformer of the encoding device of FIG. 12, and the process of encoding the information on residual may be performed by the entropy encoder of the encoding device of FIG. 12.

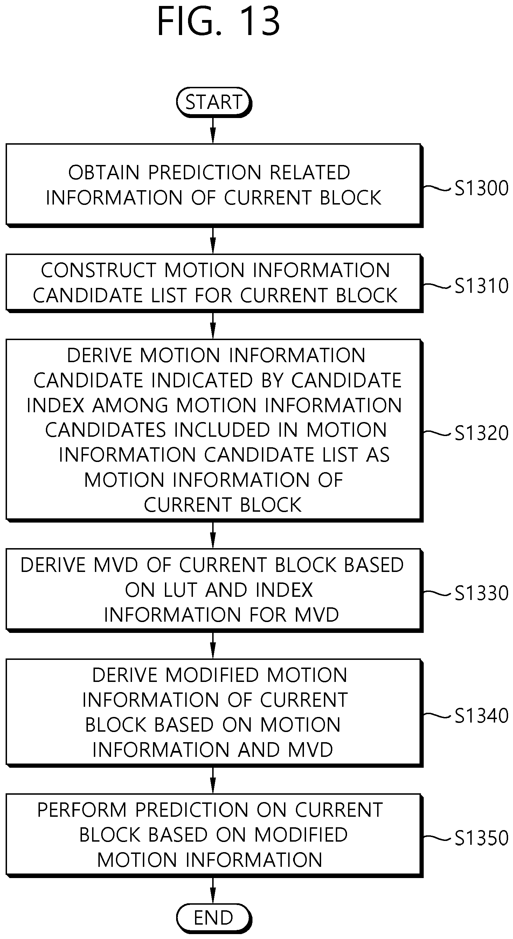

FIG. 13 schematically represents an image decoding method by a decoding device according to the present disclosure. The method disclosed in FIG. 13 may be performed by the decoding device disclosed in FIG. 2. Specifically, for example, S1300 in FIG. 13 may be performed by the entropy decoder of the decoding device, and S1310 to S1350 may be performed by the predictor of the decoding device. Further, although not shown, the process of obtaining information on residual for the current block through a bitstream may be performed by the entropy decoder of the decoding device, the process of deriving the residual sample for the current block based on the residual information may be performed by the inverse transformer of the decoding device, and the process of generating a reconstructed picture based on the prediction sample and the residual sample of the current block may be performed by the adder of the decoding device.

The decoding device obtains prediction related information of the current block (S1300). For example, the decoding device may obtain information relating to prediction of the current block from the bitstream. The prediction related information of the current block may include prediction mode information representing a prediction mode.

As an example, the decoding device may obtain a flag representing whether the prediction mode for deriving a motion vector difference (MVD) based on a look-up table (LUT) and index information on the MVD is applied, and may determine based on the flag whether the prediction mode is applied to the current block. The prediction related information may include the flag. For example, when the value of the flag is 1, the MVD may be derived based on the index information on the LUT and the MVD. Meanwhile, when the prediction mode is applied, the motion information candidate representing sub-block unit motion information may not be derived. Additionally, in this case, the prediction related information on the sub-block unit motion information may not be signaled.

Furthermore, for example, the prediction related information may include a candidate index and index information on a motion vector difference (MVD). The candidate index may indicate one of motion information candidates included in a motion information candidate list.

Also, for example, the index information on an MVD may include a distance index and a direction index for the MVD. Alternatively, for example, the index information on the MVD includes a distance index for the x component of the MVD, a direction index for the x component, a distance index for the y component of the MVD, and a direction index for the y component.

The decoding device constructs a motion information candidate list for the current block (S1310). The decoding device may construct a motion information candidate list for the current block based on spatial neighboring blocks and/or temporal neighboring blocks of the current block. For example, motion information of the spatial neighboring blocks and/or the temporal neighboring blocks may be derived as a motion information candidate for the current block, and the motion information candidate list including the motion information candidate may be constructed. Meanwhile, the motion information candidate list may represent a merge candidate list or an MVP candidate list, and the motion information candidate may represent a merge candidate or an MVP candidate. Also, for example, the MVP candidate list may be constructed in the same way as the merge candidate list.

Furthermore, for example, when the size of the current block is 2Nx2N, the spatial neighboring blocks may include a left neighboring block, a top neighboring block, an top-right corner neighboring block, a bottom-left corner neighboring block, and/or a top-left corner neighboring block. If the size of the current block is 2Nx2N, and an x component of the top-left sample position of the current block is 0 and a y component thereof is 0, then the left neighboring block may be a block including a sample at coordinates (-1, 2N-1); the top neighboring block may be a block including a sample at coordinates (2N-1, -1); the top-right corner neighboring block may be a block including a sample at coordinates (2N, -1); the bottom-left corner neighboring block may be a block including a sample at coordinates (-1, 2N); and the top-left corner neighboring block may be a block including a sample at coordinates (-1, -1).

Furthermore, for example, when the size of the current block is 2NxN, the spatial neighboring blocks may include a top neighboring block, an top-right corner neighboring block, a bottom-left corner neighboring block, and/or a top-left corner neighboring block. If the size of the current block is 2NxN, and an x component of the top-left sample position of the current block is 0 and a y component thereof is 0, then the top neighboring block may be a block including a sample at coordinates (N-1, -1); the top-right corner neighboring block may be a block including a sample at coordinates (N, -1); the bottom-left corner neighboring block may be a block including a sample at coordinates (-1, 2N); and the top-left corner neighboring block may be a block including a sample at coordinates (-1, -1).

Furthermore, for example, when the size of the current block is Nx2N, the spatial neighboring blocks may include a left neighboring block, an top-right corner neighboring block, a bottom-left corner neighboring block, and/or a top-left corner neighboring block. If the size of the current block is Nx2N, and an x component of the top-left sample position of the current block is 0 and a y component thereof is 0, then the left neighboring block may be a block including a sample at coordinates (-1, N-1); the top-right corner neighboring block may be a block including a sample at coordinates (2N, -1); the bottom-left corner neighboring block may be a block including a sample at coordinates (-1, N); and the top-left corner neighboring block may be a block including a sample at coordinates (-1, -1).

Furthermore, for example, the temporal neighboring blocks may include a center bottom-right block of the collocated block of the current block in a collocated picture and/or a bottom-right corner neighboring block of the collocated block. The collocated block may represent a block located at a position in the collocated picture corresponding to the position of the current block.

The decoding device derives a motion information candidate indicated by a candidate index among motion information candidates included in the motion information candidate list as motion information of the current block (S1320). The candidate index may indicate one of motion information candidates included in a motion information candidate list. The decoding device may derive a motion information candidate indicated by the candidate index from among the motion information candidates as motion information of the current block. The decoding device may select a motion information candidate indicated by the candidate index from among the motion information candidates, and may derive the selected motion information candidate as the motion information of the current block.

The decoding device derives a motion vector difference (MVD) of the current block based on index information on the MVD and a look-up table (LUT) (S1330). The decoding device may derive the MVD by referring to a value indicated by the index information on the MVD in the LUT.

For example, the index information may include a distance index and a direction index for the MVD, and the distance of the MVD may be derived as the distance indicated by the value of the distance index in the LUT for MVD distance, and the direction of the MVD may be derived as a direction indicated by the value of the direction index in the LUT for an MVD direction.

The LUT for MVD distance may be the same as Table 2 above. For example, when the value of the distance index in the LUT is 0, the distance of the MVD may be derived as 1/4-pel; when the value of the distance index is 1, the distance of the MVD may be derived as 1/2-pel; when the value of the distance index is 2, the distance of the MVD may be derived as 1-pel; when the value of the distance index is 3, the distance of the MVD may be derived as 2-pel; when the value of the distance index is 4, the distance of the MVD may be derived as 4-pel; when the value of the distance index is 5, the distance of the MVD may be derived as 8-pel; when the value of the distance index is 6, the distance of the MVD may be derived as 16-pel; and when the value of the distance index is 7, the distance of the MVD may be derived as 32-pel.

In addition, the LUT for an MVD direction may be the same as Table 3 above. For example, when the binary value of the direction index in the LUT is 00, the direction of the MVD may be derived as a positive direction in the x-axis; when the binary value of the direction index is 01, the direction of the MVD may be derived as a negative direction in the x-axis; when the binary value of the direction index is 10, the direction of the MVD may be derived as a positive direction in the y-axis; and when the binary value of the direction index is 11, the direction of the MVD may be derived as a negative direction in the y-axis. Here, the MVD may be derived by multiplying the distance of the MVD by the direction, and the positive direction may represent 1 and the negative direction may represent -1. In addition, N/A in Table 3 may represent 0.

In addition, as an example, the index information may include a distance index for an x component of the MVD, a direction index for the x component, a distance index for a y component of the MVD, and a direction index for the y component, and the distance of the x component of the MVD may be derived as the distance indicated by the value of the distance index for the x component in the LUT for MVD x-component distance, and the direction of the x component of the MVD may be derived as the direction indicated by the value of the direction index for the x component in the LUT for MVD x-component direction, and the distance of the y component of the MVD may be derived as the distance indicated by the value of the distance index for the y component in the LUT for MVD y-component distance, and the direction of the y component of the MVD may be derived as the direction indicated by the value of the direction index for the y component in the LUT for MVD y-component direction.

The LUT for MVD x-component distance may be the same as Table 5, Table 9, or Table 11 above. For example, when the value of the distance index for the x component in the LUT is 0, the distance of the x component of the MVD may be derived as 1/4-pel; when the value of the distance index for the x component is 1, the distance of the x component of the MVD may be derived as 1/2-pel; when the value of the distance index for the x component is 2, the distance of the x component of the MVD may be derived as 1-pel; and when the value of the distance index for the x component is 3, the distance of the x component of the MVD may be derived as 4-pel. Alternatively, for example, when the value of the distance index for the x component in the LUT is 0, the distance of the x component of the MVD may be derived as 1/4-pel; when the value of the distance index for the x component is 1, the distance of the x component of the MVD may be derived as 1/2-pel; when the value of the distance index for the x component is 2, the distance of the x component of the MVD may be derived as 3/4-pel; and when the value of the distance index for the x component is 3, the distance of the x component of the MVD may be derived as 1-pel. Alternatively, for example, when the value of the distance index for the x component in the LUT is 0, the distance of the x component of the MVD may be derived as 1-pel; when the value of the distance index for the x component is 1, the distance of the x component of the MVD may be derived as 2-pel; when the value of the distance index for the x component is 2, the distance of the x component of the MVD may be derived as 4-pel; and when the value of the distance index for the x component is 3, the distance of the x component of the MVD may be derived as 8-pel.

Furthermore, the LUT for MVD y-component distance may be the same as Table 6, Table 10, or Table 12 above. For example, when the value of the distance index for the y component in the LUT is 0, the distance of the y component of the MVD may be derived as 1/4-pel; when the value of the distance index for the y component is 1, the distance of the y component of the MVD may be derived as 1/2-pel; when the value of the distance index for the y component is 2, the distance of the y component of the MVD may be derived as 1-pel; and when the value of the distance index for the y component is 3, the distance of the y component of the MVD may be derived as 4-pel. Alternatively, for example, when the value of the distance index for the y component in the LUT is 0, the distance of the y component of the MVD may be derived as 1/4-pel; when the value of the distance index for the y component is 1, the distance of the y component of the MVD may be derived as 1/2-pel; when the value of the distance index for the y component is 2, the distance of the y component of the MVD may be derived as 3/4-pel; and when the value of the distance index for the y component is 3, the distance of the y component of the MVD may be derived as 1-pel. Alternatively, for example, when the value of the distance index for the y component in the LUT is 0, the distance of the y component of the MVD may be derived as 1-pel; when the value of the distance index for the y component is 1, the distance of the y component of the MVD may be derived as 2-pel; when the value of the distance index for the y component is 2, the distance of the y component of the MVD may be derived as 4-pel; and when the value of the distance index for the y component is 3, the distance of the y component of the MVD may be derived as 8-pel.

In addition, the LUT for an MVD x-component direction may be the same as Table 7 above. For example, when the value of the direction index for the x component in the LUT is 0, the direction of the x component of the MVD may be derived as a positive direction; and when the value of the direction index for the x component is 1, the direction of the x component of the MVD may be derived as a negative direction.

In addition, the LUT for an MVD y-component direction may be the same as Table 8 above. For example, when the value of the direction index for the y component in the LUT is 0, the direction of the y component of the MVD may be derived as a positive direction; and when the value of the direction index for the y component is 1, the direction of the y component of the MVD may be derived as a negative direction.

Meanwhile, for example, the LUT may be predetermined.

Alternatively, for example, the LUT may be obtained through a bitstream. The LUT may be signaled through the high level syntax. The high level syntax may represent a video parameter set (VPS), a sequence parameter set (SPS), a picture parameter set (PPS), a slice segment header, a coding unit header or the like.

Alternatively, for example, an LUT index may be obtained through the bitstream, and an LUT candidate indicated by the LUT index among LUT candidates may be derived as the LUT. In addition, for example, a flag representing whether the LUT candidates exist may be obtained, and when the value of the flag is 1, the LUT index may be obtained. In addition, for example, a flag representing whether the previously used LUT is used may be obtained, and when the value of the flag is 1, the LUT used for the previous picture in decoding order may be derived as the LUT. Meanwhile, for example, when there are more LUT candidates than the maximum number of LUT candidates for the temporal layer at the time when the current picture is decoded, one of the LUT candidates having the lowest selection probability may be removed. In addition, for example, the LUT candidates may be reordered in order of decreasing selection probability.

The decoding device derives modified motion information of the current block based on the motion information and the MVD (S1340). The decoding device may derive modified motion information of the current block based on the motion information and the MVD. For example, the modified motion information may include a modified motion vector, and the modified motion vector may be derived through addition of the motion vector of the motion information and the MVD.

The decoding device performs prediction on the current block based on the modified motion information (S1350). The decoding device may derive a prediction sample of the current block by performing prediction on the current block based on the modified motion information.

For example, the prediction block of the current block may be derived based on the modified motion information, and a reconstructed block may be derived based on the prediction block. Specifically, the decoding device may derive the reference block in the reference picture based on the modified motion information. The modified motion information may include the modified motion vector and a reference picture index. The decoding device may derive a reference picture indicated by the reference picture index as a reference picture of the current block, and may derive, as the reference block of the current block, the block in the reference picture, which the modified motion vector indicates. The decoding device may generate a prediction sample based on the reference block, or use the prediction sample directly as a reconstruction sample according to the prediction mode, or generate a reconstruction sample by adding a residual sample to the prediction sample. If there exists a residual sample for the current block, the decoding device may obtain information on residual for the current block from the bitstream. The information on residual may include a transform coefficient relating to the residual sample. The decoding device may derive the residual sample (or residual sample array) for the current block based on the residual information. The decoding device may generate the reconstruction sample based on the prediction sample and the residual sample, and derive a reconstructed block or reconstructed picture based on the reconstruction sample. After this, as described above, the decoding device may apply an in-loop filtering procedure such as an SAO procedure and/or deblocking filtering to the reconstructed picture in order to improve subjective/objective video quality, as needed.

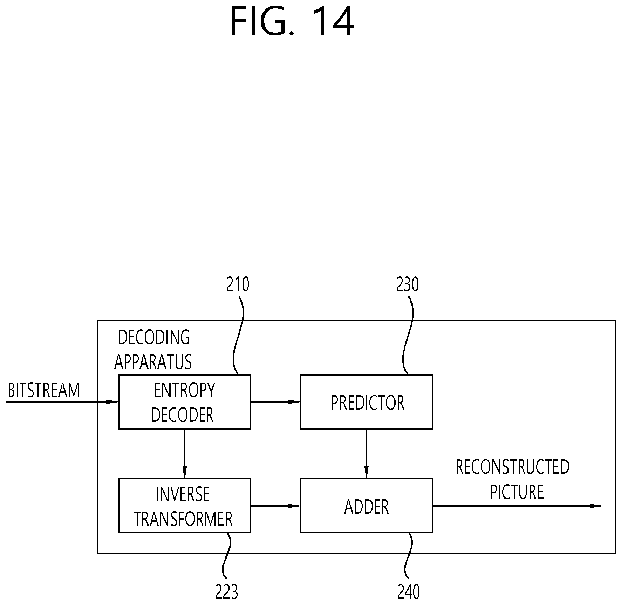

FIG. 14 schematically represents a decoding device performing an image decoding method according to the present disclosure. The method disclosed in FIG. 13 may be performed by the decoding device disclosed in FIG. 14. Specifically, for example, the entropy decoder of the decoding device of FIG. 14 may perform S1300 of FIG. 13, and the predictor of the decoding device of FIG. 14 may perform S1310 to S1350 in FIG. 13. Further, although not shown, the process of obtaining image information including information on residual for the current block through a bitstream may be performed by the entropy decoder of the decoding device of FIG. 14, and the process of deriving the residual sample for the current block based on the residual information may be performed by the inverse transformer of the decoding device of FIG. 14, and the process of generating a reconstructed picture based on the prediction sample and the residual sample may be performed by the adder of the decoding device of FIG. 14.

According to the present disclosure described above, the MVD may derived based on the signaled index information and a pre-defined look-up table (LUT), and the motion information of the current block may be derived based on the derived MVD and MVP to perform prediction, through which the amount of bits for transmitting MVD can be reduced, and overall coding efficiency can be improved.

Furthermore, according to the present disclosure described above, the MVD may be derived based on the signaled index information and a pre-defined look-up table (LUT), and the motion information of the current block may be derived based on the derived MVD and MVP to perform prediction, through which, while allocating a small amount of bits to indicate the MVD, it is possible to derive more accurate motion information than prediction performed using motion information of a neighboring block, and improve the overall coding efficiency by improving the prediction accuracy.

In the above-described embodiments, the methods are explained based on flowcharts by means of a series of steps or blocks, but the present disclosure is not limited to the order of steps, and a certain step may be performed in order or step different from that described above, or concurrently with another step. Further, it may be understood by a person having ordinary skill in the art that the steps shown in a flowchart are not exclusive, and that another step may be incorporated or one or more steps of the flowchart may be removed without affecting the scope of the present disclosure.

Embodiments described in the present document may be embodied and performed on a processor, a microprocessor, a controller or a chip. For example, function units shown in each drawing may be embodied and performed on a computer, a processor, a microprocessor, a controller or a chip. In this case, information (e.g., information on instructions) or algorithm for embodiment may be stored in a digital storage medium.

Further, the decoding device and the encoding device to which the present disclosure is applied may be included in a multimedia broadcasting transceiver, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an over the top (OTT) video device, an internet streaming service providing device, a three-dimensional (3D) video device, a video telephony video device, a transportation means terminal (e.g., a vehicle terminal, an aircraft terminal, a ship terminal, etc.) and a medical video device, and may be used to process a video signal or a data signal. For example, the over the top (OTT) video device may include a game console, a Blu-ray player, an Internet access TV, a Home theater system, a smartphone, a Tablet PC, a digital video recorder (DVR) and the like.

In addition, the processing method to which the present disclosure is applied, may be produced in the form of a program executed by a computer, and be stored in a computer-readable recording medium. Multimedia data having a data structure according to the present disclosure may also be stored in a computer-readable recording medium. The computer-readable recording medium includes all kinds of storage devices and distributed storage devices in which computer-readable data are stored. The computer-readable recording medium may include, for example, a Blu-ray Disc (BD), a universal serial bus (USB), a ROM, a PROM, an EPROM, an EEPROM, a RAM, a CD-ROM, a magnetic tape, a floppy disk, and an optical data storage device. Further, the computer-readable recording medium includes media embodied in the form of a carrier wave (for example, transmission over the Internet). In addition, a bitstream generated by the encoding method may be stored in a computer-readable recording medium or transmitted through a wired or wireless communication network.

Additionally, the embodiments of the present disclosure may be embodied as a computer program product by program codes, and the program codes may be executed on a computer by the embodiments of the present disclosure. The program codes may be stored on a computer-readable carrier.

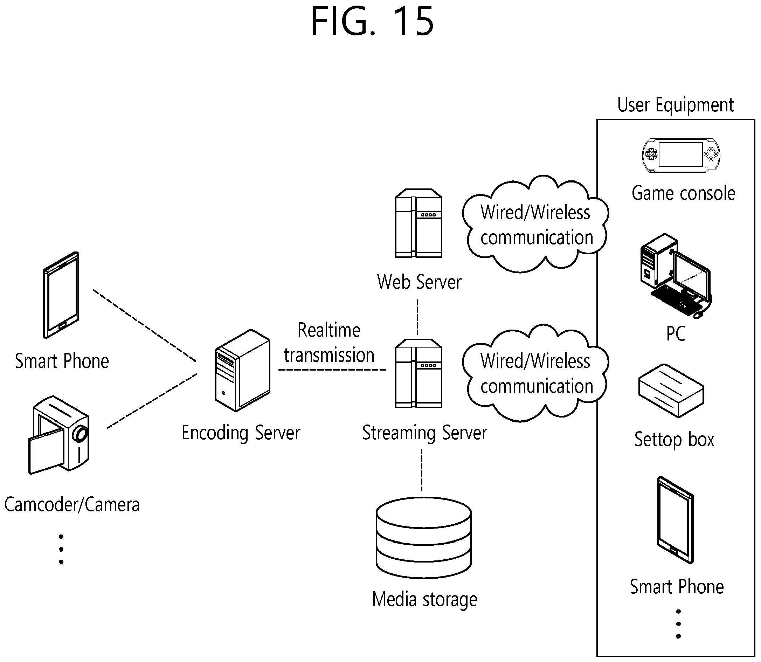

FIG. 15 illustratively represents a content streaming system structure diagram to which the present disclosure is applied.

The contents streaming system to which the present disclosure is applied may largely include an encoding server, a streaming server, a web server, a media storage, a user equipment, and a multimedia input device.

The encoding server functions to compress to digital data the contents input from the multimedia input devices, such as the smart phone, the camera, the camcoder and the like, to generate a bitstream, and to transmit it to the streaming server. As another example, in a case where the multimedia input device, such as, the smart phone, the camera, the camcoder or the like, directly generates a bitstream, the encoding server may be omitted.

The bitstream may be generated by an encoding method or a bitstream generation method to which the present disclosure is applied. And the streaming server may store the bitstream temporarily during a process to transmit or receive the bitstream.

The streaming server transmits multimedia data to the user equipment based on a user's request through the web server, which functions as an instrument that informs a user of what service there is. When the user requests a service which he or she wants, the web server transfers it to the streaming server, and the streaming server transmits multimedia data to the user. In this regard, the contents streaming system may include a separate control server, and in this case, the control server functions to control commands/responses between respective equipments in the content streaming system.

The streaming server may receive contents from the media storage and/or the encoding server. For example, in a case the contents are received from the encoding server, the contents may be received in real time. In this case, the streaming server may store the bitstream for a predetermined period of time to provide the streaming service smoothly.

For example, the user equipment may include a mobile phone, a smart phone, a laptop computer, a digital broadcasting terminal, a personal digital assistant (PDA), a portable multimedia player (PMP), a navigation, a slate PC, a tablet PC, an ultrabook, a wearable device (e.g., a watch-type terminal (smart watch), a glass-type terminal (smart glass), a head mounted display (HMD)), a digital TV, a desktop computer, a digital signage or the like.

Each of servers in the contents streaming system may be operated as a distributed server, and in this case, data received by each server may be processed in distributed manner.

## Claims

1. An image decoding method performed by a decoding device, the method comprising:
obtaining prediction related information of a current block;
constructing a motion information candidate list for the current block;
deriving a motion information candidate indicated by a candidate index among motion information candidates included in the motion information candidate list as motion information of the current block;
deriving a motion vector difference (MVD) of the current block based on a look-up table (LUT) and index information on the MVD;
deriving modified motion information of the current block based on the motion information and the MVD; and
performing prediction on the current block based on the modified motion information,
wherein the prediction related information includes the candidate index and the index information on the MVD.

2. The image decoding method of claim 1, wherein:
the index information includes a distance index and a direction index for the MVD;
distance of the MVD is derived as distance indicated by a value of the distance index in an LUT for MVD distance; and
a direction of the MVD is derived as a direction indicated by the value of the direction index in an LUT for a MVD direction.

3. The image decoding method of claim 2, wherein the LUT for the MVD distance is
| | | | | | | | | |
|---|---|---|---|---|---|---|---|---|
| **Distance IDX** | 0 | 1 | 2 | 3 | 4 | 5 | 6 | 7 |
| **Pixel distance** | 1/4-pel | 1/2-pel | 1-pel | 2-pel | 4-pel | 8-pel | 16-pel | 32-pel |
where Distance IDX represents the distance index.

4. The image decoding method of claim 2, wherein the LUT for the MVD direction is
| | | | | |
|---|---|---|---|---|
| **Direction IDX** | 00 | 01 | 10 | 11 |
| **x-axis** | + | - | N/A | N/A |
| **y-axis** | N/A | N/A | + | - |
,
where Direction IDX represents the direction index.

5. The image decoding method of claim 1, wherein:
the index information includes a distance index for an x component of the MVD, a direction index for the x component, a distance index for a y component of the MVD, and a direction index for the y component;
distance of the x component of the MVD is derived as distance indicated by a value of the distance index for the x component in an LUT for MVD x-component distance;
a direction of the x component of the MVD is derived as a direction indicated by a value of the direction index for the x component in an LUT for an MVD x-component direction;
distance of the y component of the MVD is derived as distance indicated by a value of the distance index for the y component in an LUT for MVD y-component distance; and
a direction of the y component of the MVD is derived as a direction indicated by a value of the direction index for the y component in an LUT for an MVD y-component direction.

6. The image decoding method of claim 5, wherein:
the LUT for the MVD x-component distance is
| | | | | |
|---|---|---|---|---|
| **Distance IDX_X** | 0 | 1 | 2 | 3 |
| **Pixel distance** | 1/4-pel | 1/2-pel | 1-pel | 4-pel |
,
where Distance IDX_X is the distance index for the x component; and
the LUT for the MVD x-component direction is
| | | |
|---|---|---|
| **Direction IDX_X** | 0 | 1 |
| **axis** | + | - |
,
where Direction IDX_X is the direction index for the x component of the MVD.

7. The image decoding method of claim 5, wherein:
the LUT for the MVD y-component distance is
| | | | | |
|---|---|---|---|---|
| **Distance IDX_Y** | 0 | 1 | 2 | 3 |
| **Pixel distance** | 1/4-pel | 1/2-pel | 1-pel | 4-pel |
,
where Distance IDX_Y is the distance index for the Y component of the MVD; and
the LUT for the MVD y-component direction is
| | | |
|---|---|---|
| **Direction IDX_Y** | 0 | 1 |
| **axis** | + | - |
,
where Direction IDX Y is the direction index for the y component of the MVD.

8. The image decoding method of claim 1, wherein:
the prediction related information includes a flag representing whether a prediction mode for deriving the MVD based on the LUT and the index information on the MVD is applied; and
when the value of the flag is 1, the MVD is derived based on the LUT and the index information on the MVD.

9. The image decoding method of claim 8, wherein when the prediction mode is applied, a motion information candidate representing subblock unit motion information is not derived.

10. The image decoding method of claim 1, wherein the LUT is predetermined.

11. An image encoding method performed by an encoding device, the method comprising:
constructing a motion information candidate list for a current block;
deriving motion information of the current block based on the motion information candidate list;
deriving a motion vector difference (MVD) of the current block based on a look-up table (LUT);
deriving modified motion information of the current block based on the motion information and the MVD;
performing prediction on the current block based on the modified motion information;
and
encoding image information including prediction related information of the current block,
wherein the prediction related information includes index information on the MVD.

12. The image encoding method of claim 11, wherein:
the index information includes a distance index and a direction index for the MVD;
the distance index represents the distance of the MVD in an LUT for MVD distance;
and
the direction index represents the direction of the MVD in an LUT for an MVD direction.

13. The image encoding method of claim 12, wherein the LUT for the MVD distance is
| | | | | | | | | |
|---|---|---|---|---|---|---|---|---|
| **Distance IDX** | 0 | 1 | 2 | 3 | 4 | 5 | 6 | 7 |
| **Pixel distance** | 1/4-pel | 1/2-pel | 1-pel | 2-pel | 4-pel | 8-pel | 16-pel | 32-pel |
,
where Distance IDX represents the distance index.

14. The image encoding method of claim 12, wherein the LUT for the MVD direction is
| | | | | |
|---|---|---|---|---|
| **Direction IDX** | 00 | 01 | 10 | 11 |
| **x-axis** | + | - | N/A | N/A |
| **y-axis** | N/A | N/A | + | - |
,
where Direction IDX represents the direction index.

15. The image encoding method of claim 11, wherein the LUT is predetermined.
